# EUROPÄISCHE PATENTANMELDUNG

(11) **EP 3 139 101 A1**
(43) Veröffentlichungstag der Anmeldung: **08.03.2017**
(21) Anmeldenummer: 16001797.6
(22) Anmeldetag: 09.06.2011
(51) Int. Cl.: F24D 17/00, F24D 19/10, F24D 3/08, F24D 3/10, F28F 27/02, F28D 21/00, G05D 23/19, G06Q 50/06

(54) **REGELSYSTEM, VERFAHREN ZUM BEREITSTELLEN EINES SEKUNDÄRMEDIUMS SOWIE VERFAHREN ZUM NACHRÜSTEN EINER WOHNUNG**

(30) Priorität: 09.06.2010 DE 102010023248; 30.11.2010 DE 102010052756; 22.12.2010 DE 102010055519
(62) Teilanmeldung aus: 11004716.4
(71) Anmelder: Delta Systemtechnik GmbH, 29227 Celle (DE)
(72) Erfinder: Geck, Thomas, DE - 30559 Hannover (DE)
(74) Vertreter: Farago, Peter Andreas

(57) **Zusammenfassung**

Regelsystem zum Bereitstellen eines mittels eines Primärmediums erwärmten Sekundärmediums an einer Zapfstelle in einem Gebäude, mit einem Hauptwärmetauscher und einer Drossel, wobei zusätzlich zum Hauptwärmetauscher ein Regelwärmetauscher vorgesehen ist, welcher mit dem Hauptwärmetauscher in Reihe angeordnet ist, und dass die Drossel dazu eingerichtet ist, in Abhängigkeit eines Temperaturmessers am Sekundärmedium auf ein Stellglied für das Primärmedium einzuwirken.

## Beschreibung

Die Erfindung betrifft ein Regelsystem zum Bereitstellen eines erwärmten Sekundärmediums an einer Zapfstelle, ein Verfahren zum Bereitstellen eines erwärmten Sekundärmediums an einer Zapfstelle sowie ein Verfahren zum Nachrüsten einer Wohnung mit einem Regelwärmetauscher.

Es stellt sich regelmäßig die Aufgabe, ein kühleres Medium durch ein wärmeres Medium zu erwärmen, ohne dass die beiden Medien vermischt werden sollen. Beispielsweise ist dies bekannt zum Erwärmen von Trinkwasser in einem Wohnhaus oder einer Wohnung. Dort gibt es diverse Zapfstellen, an welchen erwärmtes Trinkwasser bereitgestellt werden soll, beispielsweise an einem Wasserhahn oder an einer Dusche.

Das Erwärmen des Trinkwassers kann beispielsweise mit einem elektrischen Durchlauferhitzer geschehen. Dies erfordert allerdings eine Vielzahl von solchen Geräten und wird oft als unwirtschaftlich einzustufen sein.

Effizientere Systeme greifen auf ein heißes Primärmedium zu und erwärmen in einem Wärmetauscher das Sekundärmedium, also das Trinkwasser, bis auf die gewünschte Temperatur an der Zapfstelle.

Als heißes Primärmedium kann das Heizungswasser aus dem Heizungsvorlauf verwendet werden. Dieses ist in der Regel wärmer als die Temperatur an der Zapfstelle betragen soll. Eine typische Konstellation kann vorsehen, dass der Heizungsvorlauf etwa 65 °C an Temperatur aufweist, wohingegen das Warmwasser auf beispielsweise 45 °C erwärmt werden soll.

Wenn nur eine geringe Menge an Warmwasser an der Zapfstelle angefordert wird, dann ist es wirtschaftlich, nur eine geringe Menge des Primärmediums durch den Wärmetauscher zum Erwärmen des kalt in das Regelsystem eingespeisten Trinkwassers zu führen.

Die Menge des Primärmediums zum Erwärmen dieses Sekundärmediums wird über Regler bestimmt.

Aus der DE 20 2008 006 054 U1 ist ein Regler bekannt, welcher über eine mechanische Kopplung zweier Strömungswege die Regelung vornimmt, nämlich einerseits eines Strömungswegs für das Primärmedium und andererseits eines Strömungswegs für das Sekundärmedium. Sobald an der Zapfstelle das erwärmte Sekundärmedium angefordert wird, beginnt dieses infolge des Versorgungsdrucks des Wasserwerks zu strömen. Hierbei baut sich im Strömungsweg des Sekundärmediums im Regler ein Druck auf. Dieser öffnet einen Schieber, welcher den Strömungsweg für das Primärmedium stufenlos freigeben oder verschließen kann. Wenn also eine große Menge an warmem Sekundärmedium an der Zapfstelle angefordert wird, lässt der Regler eine entsprechend große Strömung für das heiße Primärmedium zu. Wenn hingegen nur wenig warmes Sekundärmedium an der Zapfstelle angefordert wird, lässt der Regler nur einen geringen Strom des heißen Primärmediums strömen. Eine Vermischung von Primärmedium und Sekundärmedium wird durch ein ausgeklügeltes Dichtungssystem verhindert.

Weiter ist im Stand der Technik bekannt, einen Plattenwärmetauscher mit einer Drossel für das Heizungswasser zu versehen. Das Heizungswasser wird so lange durch den Wärmetauscher geführt, bis im Wärmetauscher die Temperatur erreicht ist, welche an der Zapfstelle erwartet wird, also beispielsweise 45 °C. Dann wird das Primärmedium, also das Heizungswasser, abgeregelt. Erst wenn an der Zapfstelle von neuem gezapft wird, wird die Zuleitung für das Heizungswasser wieder geöffnet.

In der Praxis führt dies allerdings zu einigen unangenehmen Effekten: so ist selbst im Idealfall damit zu rechnen, dass beim Zapfen zunächst die Temperatur aus dem Wärmetauscher ankommt, nämlich die gewünschten 45 °C. Danach kommt jedoch bei weiter geöffneter Zapfstelle zunächst eine Temperatursenke, denn neues Heizungswasser wird erst dann wieder durch den Wärmetauscher geführt. Erst nach der Senke ist wieder die gewünschte Temperatur vorhanden. Außerdem, und bedeutender als das vorstehend geschilderte Problem, kann sich der Wärmetauscher bei längerem Stehen auf zu hohe Temperaturen aufheizen. So kann in der Praxis mit konkreten Temperaturbeispielen regelmäßig beobachtet werden, dass ein mit 65 °C anstehendes Heizungswasser den gesamten Wärmetauscher auf beispielsweise 60 °C aufheizt. Bei Zapfbeginn kann dann diejenige Menge Wasser, die bereits im Wärmetauscher vorhanden war, und gegebenenfalls auch die danach zunächst durch den Wärmetauscher laufende Wassermenge, mit einer Temperatur von beispielsweise 60 °C an der Zapfstelle ankommen. Dies ist nicht nur mit Blick auf den Bedienkomfort problematisch, sondern kann sogar eine Verbrühungsgefahr für den Benutzer darstellen.

Ein weiterer Regler für das Primärmedium wurde von der Gemina Termix A/S, 7451 Sunds, Dänemark unter der dortigen Produktbezeichnung "Termix One" vorgestellt, vgl. www.termix.dk.

Ein weiterer Wärmetauscher ist aus der DE 10 2007 007 975 B4 bekannt.

Der Erfindung liegt die Aufgabe zugrunde, ein verbessertes Regelsystem zur Verfügung zu stellen.

Nach einem ersten Aspekt der Erfindung löst diese Aufgabe ein Regelsystem zum Bereitstellen eines mittels eines Primärmediums erwärmten Sekundärmediums an einer Zapfstelle, mit einem Hauptwärmetauscher und einer Drossel, wobei zusätzlich zum Hauptwärmetauscher ein Regelwärmetauscher vorgesehen ist, welcher mit dem Haupt-wärmetauscher in Reihe angeordnet ist, wobei die Drossel dazu eingerichtet ist, in Abhängigkeit eines Temperaturmessers am Sekundärmedium und/oder in einem Rücklauf des Primärmediums auf ein Stellglied für das Primärmedium einzuwirken.

Begrifflich sei zunächst erläutert, dass unter einem "Regelsystem" alle Komponenten verstanden werden, die innerhalb des Heißwasser-, Warmwasser-, Kaltwassersystems erforderlich oder sinnvoll sind. Insbesondere gehört ein Wärmetauscher zum Regelsystem, aber auch die Mess- und Stelleinrichtungen sowie gegebenenfalls ein Rechner zum Auswerten der Messdaten und zum Generieren von Stellimpulsen für die Stelleinrichtung.

Im hier vorgeschlagenen Regelsystem sind mindestens zwei Wärmetauscher vorhanden, nämlich der "Hauptwärmetauscher" und der "Regelwärmetauscher". Der Hauptwärmetauscher kennzeichnet sich gegenüber dem Regelwärmetauscher dadurch, dass er deutlich mehr Wärmetauschleistung aufbringen kann. Der Regelwärmetauscher hingegen wird entweder ausschließlich oder jedenfalls primär dazu verwendet, Teil der eigentlichen Regelung zu sein.

Unter einer "Anordnung in Reihe" soll im Rahmen der Erfindung verstanden werden, dass entweder ein Strömungskanal für das Primärmedium oder für das Sekundärmedium oder für beide zunächst durch einen der beiden Wärmetauscher und dann durch den anderen Wärmetauscher führt.

Die Erfindung greift auf die Erkenntnis zurück, dass der Regelwärmetauscher aufgrund seiner kleineren Größe im Verhältnis zum Hauptwärmetauscher deutlich weniger träge ist. Die Temperaturmessung wird deshalb am Regelwärmetauscher vorgenommen. Das Stellglied kann dann erheblich besser an die tatsächlichen Temperaturverhältnisse im Zulauf zur Zapfstelle Einfluss nehmen.

Bei geeigneter Ausgestaltung ist das vorgeschlagene Regelsystem beispielsweise dazu in der Lage, dass sich kein Temperaturpeak beim Zapfen von Warmwasser feststellen lässt. Bei gleicher oder anderer geeigneter Gestaltung kann das Regelsystem außerdem sehr variabel für verschiedene Wärmetauscher einsetzbar sein.

Es wird vorgeschlagen, dass der Regelwärmetauscher für das Primärmedium stromauf des Hauptwärmetauschers angeordnet ist, bevorzugt an einem Heizungsvorlauf. Bei einer solchen Konstellation durchströmt das heiße Primärmedium zunächst den Regelwärmetauscher und erst dann den Hauptwärmetauscher. Dies hat jedoch auf den Wärmetausch im Hauptwärmetauscher wenig Einfluss, da der Regelwärmetauscher deutlich weniger Wärmetauschleistung hat als der Hauptwärmetauscher. Geschickterweise kann der Regelwärmetauscher direkt mit dem Heizungsvorlauf als zuströmendes Primärmedium verbunden werden.

Unabhängig hiervon, aber bevorzugt in Ergänzung hierzu, wird vorgeschlagen, dass der Hauptwärmetauscher für das Sekundärmedium stromauf des Regelwärmetauschers angeordnet ist, und zwar an einem Trinkwasserzulauf. Bei einer solchen Konstellation fließt das zu erwärmende Sekundärmedium in Form des Trinkwasserzulaufs zunächst durch den Hauptwärmetauscher und erst dann durch den Regelwärmetauscher. Der Regelwärmetauscher liegt demzufolge im Strömungsweg des erwärmten Trinkwassers vom Hauptwärmetauscher zur Zapfstelle. Der Regelwärmetauscher kann daher auf sehr akkurate Messwerte zur Temperatur zurückgreifen.

Bevorzugt durchströmen das Primärmedium und das Sekundärmedium die beiden in Reihe geschalteten Wärmetauscher in entgegengesetzter Richtung.

Es wurde bereits darauf hingewiesen, dass der Hauptwärmetauscher eine deutlich größere Wärmetauschleistung erbringen soll als der Regelwärmetauscher. Konkret wird vorgeschlagen, dass die Wärmetauschleistung des Hauptwärmetauschers mehr als 5, 10, 50, 100 oder 500 Mal so groß sein soll wie diejenige im Regelwärmetauscher.

Ein gutes Maß für die Vergleichbarkeit der beiden Wärmetauschleistungen bieten auch die Volumina, welche für das Medium zum Wärmetauschen bereitgestellt werden. So wird vorgeschlagen, dass ein Hauptwärmetauschervolumen für das Sekundärmedium im Hauptwärmetauscher ebenfalls größer ist als ein Regelwärmetauschervolumen für das Sekundärmedium im Regelwärmetauscher, und zwar bevorzugt mehr als 5, 10 oder 50 Mal so groß.

Der Regelwärmetauscher kann zum Bereitstellen des Primärmediums an einen Heizungsvorlauf angeschlossen sein. Wohn- oder Geschäftsgebäude sind üblicherweise beheizt. Aus einem zentralen Kessel wird heißes Wasser zu den Heizkörpern transportiert. Der Weg vom Kessel zu diesen Heizkörpern wird als "Heizungsvorlauf" bezeichnet. Wenn der Regelwärmetauscher an den Heizungsvorlauf angeschlossen ist, kann er nicht nur auf die ohnehin vorhandene Primärmediumerwärmungseinrichtung am zentralen Heizungskessel zurückgreifen, was eine weitere Erwärmeinrichtung überflüssig macht, sondern das heiße Primärmedium wird im Regelfall sogar immer am Regelwärmetauscher anliegen.

Bevorzugt speist der Regelwärmetauscher einen Wohnungs-Heizkreisvorlauf. Der Heizungsvorlauf vom Kessel führt üblicherweise zu den Heizkörpern eines Gebäudes. Dort können beispielsweise mehrere Wohnungen vorhanden sein. Jede Wohnung hat ihren eigenen Heizkreis, also das Heizungswasserleitungssystem, welches zu den einzelnen Heizkörpern der Wohnung und von dort wieder zurück führt. Gleiches gilt naturgemäß auch für Einfamilienhäuser, Hausanteile, Büros und andere Gebäude oder Gebäudeteile. Wenn der Regelwärmetauscher einen Heizkreisvorlauf speist, führt er das heiße Primärmedium zumindest zum Teil weiter in das Leitungssystem, welches zu den einzelnen Einheiten führt, also zu einem Heizkreisvorlauf oder zu verschiedenen Heizkreisvorläufen.

Der Regelwärmetauscher kann ohne Weiteres vom Heizungsvorlauf Heißwasser als Primärmedium genau dann abzweigen, wenn an einer Zapfstelle heißes Wasser angefordert wird. Ein Heizungssystem ist sehr träge. Dies liegt schon daran, dass sich die Heizkörper aufwärmen. Wenn im zuströmenden Heizungswasser zum Heizkreisvorlauf, also prinzipiell zu den einzelnen Heizkörpern, für eine kürzere Zeit eine Temperatursenke auftritt, wird dies an den Heizkörpern im Normalfall nicht feststellbar sein. Während eines Zapfvorgangs kann es also ohne Weiteres toleriert werden, wenn der Heizkreisvorlauf mit einer geringeren Geschwindigkeit durchströmt wird und/oder eine geringfügig geringere Temperatur durch den Heizkreis geführt wird.

Wenn ohnehin heißes Primärmedium am hier vorgeschlagenen Regelsystem anliegt, dann wird vorgeschlagen, dass ein Bypass für das Primärmedium vorgesehen ist, sodass auch bei geschlossenem Stellglied ein Leckstrom am Primärmedium durch den Regelwärmetauscher strömen kann. Während des nicht-Zapfens von Warmwasser an der Zapfstelle steht das Heißwasser normalerweise zwar am Regelwärmetauscher an. Wenn keine Durchführung des Heißwassers als Primärmedium durch den Regelwärmetauscher erfolgt, kann sich dieser jedoch entweder zu sehr aufheizen oder sogar einschließlich des vor ihm stehenden Wassers zu sehr abkühlen. Abhilfe schafft ein Bypass für das heiße Primärmedium. Ein Bypass lässt einen Leckstrom auch bei geschlossenem Regelwärmetauscher beziehungsweise bei geschlossenem Stellglied strömen. Die negativen Effekte des stehenden Primärmediums am Regelwärmetauscher sind deshalb entweder nicht oder zumindest nur in verringertem Maße zu erwarten.

Ein Leckstrom kann beispielsweise durch den Regelwärmetauscher hindurch geführt werden. Alternativ oder kumulativ ist denkbar, dass ein Leckstrom über einen Bypass um den Regelwärmetauscher herum geführt wird. Dies würde zumindest dazu führen, dass am Eingang des Regelwärmetauschers das Primärmedium in seiner üblicherweise zu erwartenden Temperatur ansteht.

Bei einer bevorzugten Ausführungsform des vorgeschlagenen Regelsystems sind das Primärmedium und das Sekundärmedium sowohl im Haupt- als auch im Regelwärmetauscher im Gegenstrom zueinander angeschlossen. Sowohl im Haupt- als auch im Regelwärmetauscher liegen dann zwischen den beiden Medien sowohl am Eingang als auch am Ausgang die größten Temperaturdifferenzen vor, was den Wärmetausch unterstützt.

In rein konstruktiver Hinsicht wird vorgeschlagen, dass der Regelwärmetauscher koaxial ausgeführt ist. Dies bedeutet, dass jedenfalls zwei Strömungskanäle im Regelwärmetauscher ausgebildet sind, nämlich ein erster Strömungskanal für das Primärmedium und ein zweiter Strömungskanal für das Sekundärmedium. Diese sind zumindest zum Teil umeinander herumgeführt, sodass beide eine Achse haben. Eine Achse kann sich nicht nur bei einer linearen Strömungsführung ergeben, sondern auch bei beispielsweise einer spiralartigen Strömungsführung.

Hinsichtlich der Achsen der beiden Strömungskanäle wird vorgeschlagen, dass diese koaxial sind. In einem einfachsten konstruktiven Beispiel sind die beiden Strömungsführungen jeweils als gerades zylindrisches Rohr ausgebildet, wobei ein Rohr innerhalb des anderen Rohres angeordnet ist. Wenn in diesem Fall das innere, kleinere Rohr - im Idealfall mittig - im größeren Rohr verläuft, sind die beiden Strömungsführungen koaxial.

Es sei ausdrücklich daraufhingewiesen, dass auch eine nicht mathematisch-exakte koaxiale Anordnung diesen Erfindungsgedanken verwirklicht, sofern nur ein Rohr innerhalb des anderen Rohres verläuft. Der Wärmetauscher baut schon dann sehr kompakt und gleichzeitig hocheffizient.

Eine Trennung von Primär- zu Sekundärmedium innerhalb des Regelwärmetauschers kann ein- oder mehrwandig sein.

Ebenfalls in rein konstruktiver Hinsicht wird vorgeschlagen, dass ein Primärmediumanschluss und/oder ein Sekundärmediumanschluss in ihrer Orientierung am Regelwärmetauscher verstellbar gestaltet sind, bevorzugt drehbar. Es wurde bereits erwähnt, dass das hier vorgeschlagene Regelsystem bei geeigneter Gestaltung sehr variabel für verschiedene Heizungs- uns Wassersysteme eingesetzt werden kann. Wenn die Anschlüsse in ihrer Orientierung am Regelwärmetauscher verstellbar sind, reichen bereits kleinste Bauräume zum Montieren des Regelwärmetauschers, auch wenn ein Hauptwärmetauscher bereits im System vorhanden war. Auch ist es dann möglich, mit möglichst wenigen zusätzlichen Leitungsstücken den Anschluss zu bewirken.

Die "drehbare" Ausgestaltung bietet sich vor allem dann an, wenn der Regelwärmetauscher im Wesentlichen einen zylindrischen Korpus hat.

Hinsichtlich der Temperaturmessung im Regelsystem wird vorgeschlagen, dass der Temperaturmesser in einer Sekundärmediumführung angeordnet ist, bevorzugt im Regelwärmetauscher, und dass - in jedem Falle - die Drossel dazu eingerichtet ist, das Stellglied zu öffnen, wenn eine untere Hysteresetemperatur erreicht ist, und das Stellglied zu schließen, wenn eine obere Hysteresetemperatur erreicht ist.

Der Temperaturmesser macht in der Sekundärmediumführung schon deshalb Sinn, weil das Regelsystem zur Aufgabe hat, für eine gleichmäßige Temperatur an der Zapfstelle zu sorgen, wobei die Zapfstelle ein Ende der Sekundärmediumführung darstellt. Bei einer Temperaturmessung in der Sekundärmediumführung wird also das Wasser gemessen, welches zur Zapfstelle fließt.

Bevorzugt geschieht dies im Regelwärmetauscher. Der Regelwärmetauscher ist dazu eingerichtet, dass das Sekundärmedium durch ihn fließt. Es wurde bereits erläutert, dass der Regelwärmetauscher bevorzugt stromab des Hauptwärmetauschers für das Sekundärmedium angeordnet ist, sodass das Wasser auf dem Weg zu Zapfstelle den Hauptwärmetauscher bereits durchlaufen hat. Somit kann diejenige Temperatur gemessen werden, auf welche der Hauptwärmetauscher das Sekundärmedium gebracht hat. Der Regelwärmetauscher ist in seiner Wärmetauschleistung deutlich dem Hauptwärmetauscher untergeordnet. Der Regelwärmetauscher wird daher auf die vom Hauptwärmetauscher im Sekundärmedium erzeugte Temperatur nach Möglichkeit keinen nennenswerten Einfluss mehr haben. Deshalb kann in einer kompakten und sehr robusten Ausführungsform die Temperatur des Sekundärmediums im Regelwärmetauscher gemessen werden.

Je nach Konstellation des gesamten Regelsystems kann einstellbar sein, um welche Temperaturverfälschung das Sekundärmedium den Regelwärmetauscher nach der Temperaturmessung verlässt.

Bevorzugt weist der Regelwärmetauscher eine einstellbare Thermostateinrichtung auf. Eine solche Thermostateinrichtung sollte an einem Auslass am Regelwärmetauscher für das Sekundärmedium angebracht sein, sodass mit einfachen Mitteln einstellbar ist, mit welcher Temperatur das Sekundärmedium im Regelfall den Regelwärmetauscher und somit das gesamte Regelsystem verlässt.

Es wird vorgeschlagen, dass der Regelwärmetauscher isolierverkleidet ist, während der Hauptwärmetauscher bevorzugt nicht isolierverkleidet ist.

Der Regelwärmetauscher sollte vorzugsweise zusammen mit Rohrstücken sowie dem Stellglied für den Hauptwärmetauscher in einem großen Isolierblock untergebracht sein. Dieser kann in einer kompakten Ausführungsform als Ganzes auf den Hauptwärmetauscher aufgesetzt und mit diesem dann verbunden sein.

Der Hauptwärmetaucher selbst ist bevorzugt nicht isoliert. Eine Isolierung ist wegen der Kombination mit dem Regelwärmetauscher vor allem dann nicht erforderlich, wenn das heiße Primärmedium nur dann durch den Wärmetauscher strömt, wenn tatsächlich Sekundärmedium gezapft wird.

Außerdem kann eine Wärmeabstrahlung nach Ende des Zapfens durchaus erwünscht sein, damit sich Primärmedium und Sekundärmedium im Hauptwärmetauscher schnell abkühlen können, weil dies eine Verkalkung der Tauscherflächen vermindert. Bei einer ständig erhöhten Temperatur steigt die Gefahr eines schnellen Verkalkens von Tauscherflächen im Hauptwärmetauscher.

Nach einem zweiten Aspekt der vorgestellten Erfindung löst die Aufgabe ein Regelwärmetauscher für ein Regelsystem wie vorstehend beschrieben.

Der Regelwärmetauscher als solcher stellt schon eine Verkörperung der Erfindung dar. Insbesondere ist es möglich, den Regelwärmetauscher selbst für bestehende Hauswassersysteme zum Nachrüsten zu vertreiben und einzubauen.

Es ergibt sich also bei einem bereits vorhandenen Hauptwärmetauscher schon durch geschicktes Ergänzen eines geeigneten Regelwärmetauschers insgesamt ein Regelsystem wie vorstehend beschrieben.

Demgemäß löst nach einem dritten Aspekt der Erfindung die gestellte Aufgabe ein Verfahren zum Nachrüsten eines Gebäudes und/oder einer Wohnung mit einem Regelwärmetauscher, wobei ein geeigneter Regelwärmetauscher zusätzlich zu einem Hauptwärmetauscher angeschlossen wird, und zwar stromauf hinsichtlich eines Primärmediums am Heizungsvorlauf, sowie stromab hinsichtlich eines zu erwärmenden Sekundärmediums stromauf einer Zapfstelle.

Der "Hauptwärmetauscher" kann vorher der einzige Wärmetauscher gewesen sein. Es ist aber auch denkbar, dass vorher bereits mehrere Wärmetauscher vorhanden waren.
Schließlich löst die gestellte Aufgabe nach einem vierten Aspekt der Erfindung ein Verfahren zum Bereitstellen eines mittels eines Primärmediums erwärmten Sekundärmediums an einer Zapfstelle, mit einem Hauptwärmetauscher, einem Regelwärmetauscher sowie mit einer Drossel mit einem Temperaturmesser und einem Stellglied, wobei
a. vor einem Zapfvorgang, also bei stehendem Sekundärmedium,
   i. im Regelwärmetauscher ein Regelwärmetauschervolumen des Sekundärmediums mittels des Primärmediums zwischen einer unteren und einer oberen Hysteresetemperatur gehalten wird,
   ii. während bevorzugt keine Strömung durch den Hauptwärmetauscher zugelassen wird,
b. und/oder zu Beginn und während des Zapfvorgangs, also bei einem von einer Zapfstelle vorgegebenen Volumenstroms an Sekundärmedium,
   i. zunächst das Regelwärmetauschervolumen des Sekundärmediums zur Zapfstelle geführt wird, gefolgt von einem Sekundärmediumstrom zunächst durch den Hauptwärmetauscher und anschließend durch den Regelwärmetauscher,
   ii. am Regelwärmetauscher durch den Temperaturmesser bei in der Regel kühlerem nächströmendem Sekundärmedium die untere Hysteresetemperatur detektiert wird,
   iii. daraufhin die Drossel das Stellglied öffnet, bis die obere Hysteresetemperatur gemessen wird,
   iv. daraufhin das Stellglied das Stellglied schließt, bis die untere Hysteresetemperatur gemessen wird,
   v. wobei zum Regeln die Schritte iii und iv permanent durchlaufen werden,
c. und/oder bei Abschluss des Zapfvorgangs, also bei angehaltenem Sekundärmedium,
   i. das Reglerwärmetauschvolumen an Sekundärmedium bei strömendem Primärmedium binnen weniger Sekunden bis zur oberen Hysteresetemperatur erwärmt wird,
   ii. woraufhin die Drossel den Primärvolumenstrom durch den Hauptwärmetauscher über das Stellglied unterbindet.

Die Erfindung wird nachstehend anhand von Ausführungsbeispielen unter Bezugnahme auf die Zeichnung weiter erläutert. Es sei ausdrücklich daraufhingewiesen, dass die beschriebenen Ausführungsbeispiele nur beispielhafte Verkörperungen der Erfindung sind, insbesondere gilt dies für die Verkörperungen in der Zeichnung. Auch mit kleinen oder großen Abweichungen von den beschriebenen Ausführungsbeispielen und insbesondere von den Verkörperungen in der Zeichnung kann die Erfindung verwirklicht sein. Außerdem sei ausdrücklich darauf hingewiesen, dass sowohl im vorstehenden Beschreibungstext als auch in der Beispielsbeschreibung ein unbestimmter Artikel "ein" nicht limitierend im Sinne von "ausschließlich ein" zu verstehen ist, sondern im Normalfall als "mindestens ein", außer wenn sich aus dem Kontext ergibt, dass tatsächlich nur "genau ein" Gegenstand oder Schritt vorgesehen sein soll. In der Zeichnung zeigen
- Figur 1: in einem schematischen Schnitt einen Regelwärmetauscher,
- Figur 2: in einem schematischen Schaltbild den Regelwärmetauscher aus Figur 1 in einem Aufbau als Regelsystem, gemeinsam mit einer Dusche als Zapfstelle, einem Kessel, einem Heizkörper und Leitungen,
- Figur 3: den Regelwärmetauscher aus Figur 1 in einer zweiten, abgewandelten Einbausituation als Regelsystem, in einer schematischen räumlichen Ansicht,
- Figur 4: einen Regelwärmetauscher mit Leitungen, montiert auf einem Hauptwärmetauscher, sowie
- Figur 5: in einem schematischen Schaltbild - ähnlich zur Darstellung in Figur 2-einen doppelwandigen Regelwärmetauscher in einer dritten, weiter abgewandelten Einbausituation als Regelsystem, wobei der doppelwandige Regelwärmetauscher in einem Bypass eines Primärmediums angeordnet ist;
- Figur 6: in einem stark vereinfachten, schematischen Schaltbild - in Form eines Ausschnitts ähnlich zur Darstellung in Figur 2 - den Regelwärmetauscher aus Figur 1 in einer vierten, anders abgewandelten Einbausituation, mit einer Temperaturmessung in einem Rücklauf eines Primärmediums,
- Figur 7: in einem schematischen Schaltbild einen Regelwärmetauscher in einer fünften Einbausituation, mit einer Temperaturmessung in einem Rücklauf des Primärmediums; sowie
- Figur 8: in einem schematischen Schaltbild eine sechste Einbausituation, bei welcher eine elektrische Nachheizung vorgesehen ist.

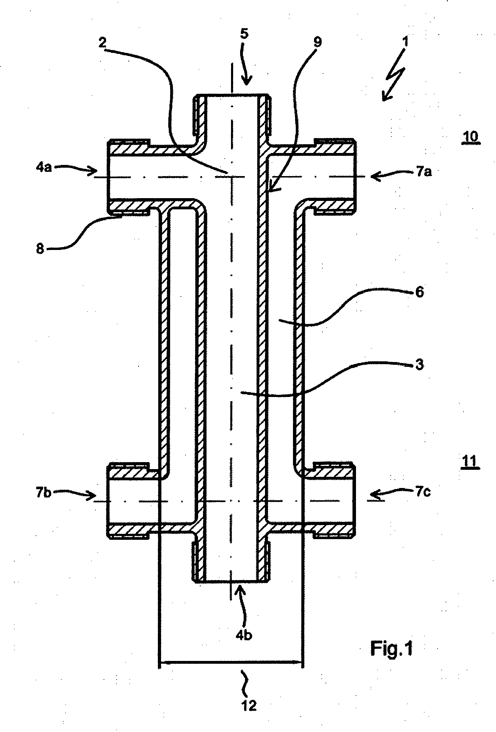

Der Regelwärmetauscher 1 in den Figuren 1, 2, 3, 4, 6, 7 und 8 hat eine im Wesentlichen längs einer Achse 2 erstreckte äußere Gestalt. Er ist im Wesentlichen um die Achse 2 zylindrisch aufgebaut.

Entlang des Regelwärmetauschers 1 verläuft an der Achse 2 ein zentraler Kanal 3. Dieser weist eine erste Öffnung 4a und eine zweite Öffnung 4b sowie eine Zugriffsöffnung 5 auf.

Um den zentralen Kanal 3 herum verläuft ein Ringkanal 6. Der Ringkanal 6 hat eine obere Öffnung 7a sowie eine erste untere Öffnung 7b und eine zweite untere Öffnung 7c.

Alle Öffnungen sind mit Rohrgewinden 8 (exemplarisch gekennzeichnet) zum dichten Aufschrauben von Anschlussstutzen (nicht dargestellt) versehen.

Über Gehäusetrennungen 9 (exemplarisch gekennzeichnet) lassen sich die Gehäuseteile mit den Öffnungen um die zentrale Achse 2 herum verdrehen. Insbesondere lassen sich die Anschlüsse einer oberen Gehäusehälfte 10 gegenüber den Anschlüssen einer unteren Gehäusehälfte 11 um die zentrale Achse 2 herum verdrehen. Zwischen den Gehäuseteilen ist an den Gehäusetrennungen 9 für eine ausreichende Abdichtung zwischen zentralem Kanal 3 und Ringkanal 6 gesorgt.

Im gezeigten Ausführungsbeispiel besteht der Regelwärmetauscher aus einem Rotguss mit einer Wanddicke von etwa 3 mm. Alternativ sind Steckteile denkbar, beispielsweise aus Kunststoff, Messing, Edelstahl oder Rotguss. Die Wanddicke beträgt bevorzugt weniger als 3 mm. Eine solch geringe Wanddicke lässt sich am ehesten mit Steckteilen realisieren.

Ein Innenmaß des zentralen Kanals 3 beträgt beispielsweise 18,3 mm.

Ein äußerer Zylinderdurchmesser 12 kann beispielsweise 50,3 mm betragen.

Alle Öffnungen können beispielsweise einen Innendurchmesser von 16 mm haben.

Für die Rohrgewinde 8 wird eine Größe von 3/4" AG (bevorzugt flachdichtend) vorgeschlagen, also ein % Zoll Anschlussgewinde.

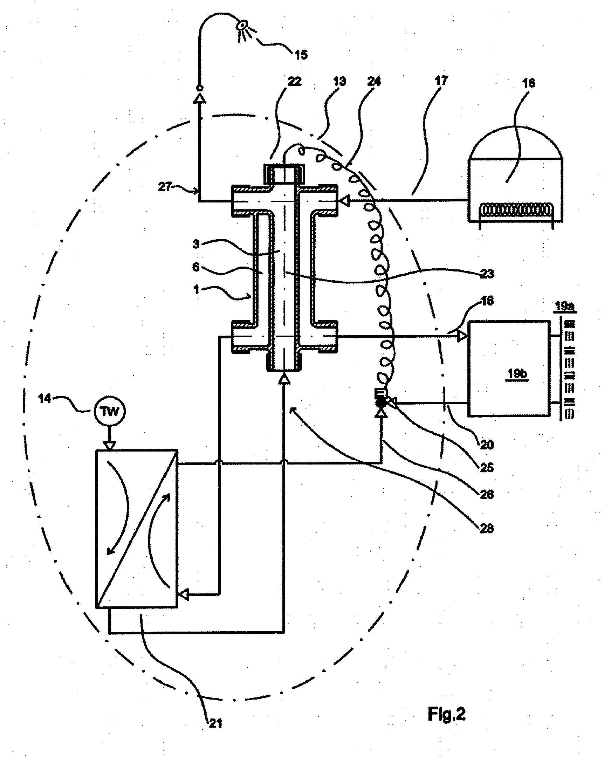

In der Einbausituation des Regelwärmetauschers 1 in Figur 2 ist es die Aufgabe des Regelsystems 13, Wasser von einem Trinkwasserzulauf 14 auf dem Weg zu einer Zapfstelle in Form der Dusche 15 zu erwärmen.

Das Regelsystem 13 greift hierzu auf den Kessel 16 zu, welcher ebenfalls als dem Regelsystem 13 zugehörig betrachtet werden kann, denn der Kessel 16 erzeugt für ein Heizungssystem eine Heizungsvorlauf 17 mit einer Temperatur von etwa 65 °C. Der Heizungsvorlauf 17 soll zu einem Heizkreisvorlauf 18 zu einer Wohnung 19a mit einem Heizkörper 19b führen. Daran schließt sich ein Heizungsrücklauf 20 an.

Im Wesentlichen besteht das Regelsystem 13 jedoch aus dem Regelwärmetauscher 1 und einem Hauptwärmetauscher 21 in Form eines Plattenwärmetauschers.

In dem Regelwärmetauscher 1 ist mit einer Schraubkappe 22 ein Temperaturmesser 23 eingesetzt, sodass der Temperaturmesser 23 in den zentralen Kanal 3 des Regelwärmetauschers 1 hineinragt. Über eine Datenleitung 24 wird die gemessene Temperatur an einen Drosselrechner 25 geleitet. Der Drosselrechner 25 hat direkten Steuerzugriff auf ein Stellglied (nicht dargestellt).

Im Betrieb ist bei geschlossener Zapfstelle in Form der Dusche 15 zunächst kein Strom zu beobachten. Da an der Dusche 15 kein warmes Wasser angefordert wird, lässt der Drosselrechner 25 über sein Stellglied kein Heizungswasser durch den Hauptwärmetauscher 21 laufen. Das Stellglied kann an einer ersten Rückführung 26 angebracht sein. Ein Stellglied kann am Heizungsrücklauf 20 angreifen.

Heizungswasser kann auf dem Weg vom Kessel 16 durch den Heizungsvorlauf 17 zur oberen Öffnung 7a des Regelwärmetauschers 1 strömen. Dort tritt es in den Ringkanal 6 ein und durchströmt den Regelwärmetauscher 1 von oben nach unten. Da der Drosselrechner 25 über das Stellglied die erste Rückführung 26 verschlossen hält, tritt das Heizungswasser nur in den Heizkreisvorlauf 18 zur Wohnung 19a aus, durchläuft dort den Heizkörper 19b und dann über den Heizungsrücklauf 20 wieder den Kessel 16 (letztes Wegstück nicht dargestellt).

Obwohl der Weg über den Hauptwärmertauscher 21 verschlossen ist, durchfließt also heißes Heizungswasser vom Heizungsvorlauf 17 den Regelwärmetauscher 1, wenn im Heizkreis der Wohnung 19a oder einer beliebigen weiteren Wohnung, welche den Heizkreis nach dem Regelwärmetauscher 1 an dessen zweiter unterer Öffnung angeschlossen ist, ein Heizkörper läuft. Der Regelwärmetauscher 1 bleibt auf diese Weise stets erwärmt. Insbesondere kühlt sich das an ihm anstehende Heizungswasser aus dem Heizungsvorlauf nicht ab.

In der Leitungsführung für das Sekundärmedium, also für das Trinkwasser vom Trinkwasserzulauf 14 hin zur Dusche 15, steht indes das zu erwärmende Trinkwasser. Im Hauptwärmetauscher wird es nicht erwärmt, weil dort kein heißes Heizungswasser durchgeführt wird.

Im Regelwärmetauscher 1 hingegen wird innerhalb des zentralen Kanals 3 stehendes Trinkwasser mittels des im Ringkanal 6 strömenden Heizungswassers erwärmt. Da der zentrale Kanal 3 nur sehr klein ist und entsprechend wenig an Trinkwasser aufnimmt, erwärmt sich dieses Trinkwasservolumen binnen weniger Sekunden.

Der Temperaturmesser 23 detektiert, dass das dort stehende Trinkwasser eine Temperatur von beispielsweise 47 °C angenommen hat. Wenn - beispielsweise über einen Thermostateinsteller (nicht dargestellt) am Regelwärmetauscher 1 - eine Temperatur von 45 °C für das Trinkwasser gewünscht ist, kann der Drosselrechner 25 auch den Strom des Heizungswassers vom Heizungsverlauf 17 durch den Regelwärmetauscher 1 unterbinden.

Falls gleichzeitig der Heizkörper 19b Heizungswasser vom Kessel 16 anfordert, ist ein Verbindungsrohr (nicht dargestellt) vorgesehen, welches das Strömen von Heizungswasser direkt vom Heizungsvorlauf zum Heizkreisvorlauf 18 gewährleistet.

Während dieser Phase, also während des stehenden Trinkwassers im Sekundärmediumkreislauf, sorgt das Regelsystem 13 auf diese Weise dafür, dass sich das Trinkwasser auch im Regelwärmetauscher 1 nicht über 47 °C erwärmt, wenn eine Temperatur von 45°C gewünscht ist.

Es versteht sich, dass diese Temperaturwerte nur beispielhaft sind. Ohne Weiteres kann eine andere Temperatur als gewünschte Temperatur am Thermostat eingestellt werden.

Unabhängig davon kann die Größe der Regelhysterese auf einen anderen Wert als +/- 2 °C eingestellt sein.

Sobald beim stehenden Heizungswasser das Trinkwasser im zentralen Kanal 3 des Regelwärmetauschers 1 abkühlt, verlässt es eine Temperatur von 47 °C und passiert die eigentlich gewünschte Temperatur von 45 °C. Bei beispielsweise 43 °C kann der Drosselrechner 25 wieder eine Strömung des Heizungswassers durch den Ringkanal 6 zulassen. Binnen weniger Sekunden ist das in dortigem Volumen stehende Trinkwasser dann wieder bis auf den oberen Regelhysteresewert erwärmt, und der Drosselrechner 25 schließt den Durchstrom von Heizungswasser erneut.

Wenn nun an der Dusche 15 Wasser gezapft wird, strömt dieses vom Trinkwasserzulauf 14 durch den Hauptwärmetauscher 21 und den Regelwärmetauscher 1 zur Dusche 15. Die Dusche 15 wird jedoch zunächst von demjenigen Wasser erreicht, welches bereits im Regelwärmetauscher 1 stand, genauer gesagt in dessen zentralem Kanal 3, wobei sich die Wärme auch auf benachbarte Bereiche 27, 28 ausgedehnt hat. An der Dusche 15 kommt daher Warmwasser mit recht genau der gewünschten Temperatur an. Im Idealfall wird die Temperatur genau getroffen. Der Benutzer an der Zapfstelle wird jedoch einen sehr geringfügigen Temperaturunterschied nicht wahrnehmen können.

Jedenfalls ist sichergestellt, dass ein zu großer Warmwasser-Temperaturpeak beim Zapfen - verbunden mit der Verbrühungsgefahr - vermieden wird.

Nachdem das bereits beim Stehen im Regelwärmetauscher 1 erwärmte Trinkwasser zur Dusche 15 abgeflossen ist, wird zunächst vom Hauptwärmetauscher 21 eine sehr geringe Menge kühleren Wassers nachgeführt. Dies ist jedoch sofort behoben, weil der Temperaturmesser 23 diesen Temperaturabfall detektiert und der Drosselrechner 25 daraufhin den Durchlauf des Heizungswassers durch den Hauptwärmetauscher 21 in dem erforderlichen Maße zulässt. Das nachströmende Trinkwasser wird daher sehr schnell auf die an der Dusche 15 gewünschte Temperatur erwärmt. Das Erwärmen erfolgt im ganz wesentlichen Maße im Hauptwärmetauscher 21. Weil das Heizungswasser zunächst durch den Regelwärmetauscher 1 strömt, erfolgt sehr geringes Nacherwärmen auch im Regelwärmetauscher 1. Das Trinkwasser hat jedoch dort eine sehr hohe Strömungsgeschwindigkeit, weil der zentrale Kanal 3 recht klein ist. Die Nacherwärmung in dem Regelwärmetauscher 1 ist daher praktisch vernachlässigbar, und sie wird außerdem vom Temperaturmesser 23 mit erfasst, weil sich dieser schließlich in exakt jenem Bereich im Regelwärmetauscher 1 befindet.

Sobald in der Dusche 15 kein Warmwasser mehr gezapft wird, steht das Trinkwasser wieder im Regelwärmetauscher 1 und erwärmt sich in Folge dessen binnen weniger Sekunden zum oberen Regelhysteresewert. Der Drosselrechner 25 schließt dann abermals die Durchströmung des Heizungswassers durch Regelwärmetauscher 1 und den Hauptwärmetauscher 21. Somit ist der ursprünglich beschriebene Zustand wieder erreicht.

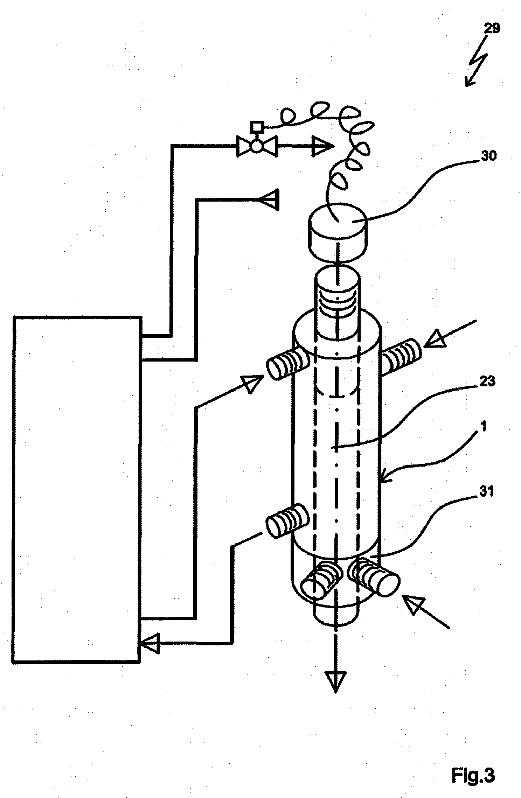

Bei dem alternativen Regelsystem 29 in Figur 3 läuft dieselbe Regelung ab wie vorstehend beschrieben. Während beim zunächst beschriebenen Regelsystem 13 jedoch das Primärmedium (Heizungswasser) und das Sekundärmedium (zu erwärmendes Trinkwasser) sowohl im Regelwärmetauscher 1 als auch im Hauptwärmetauscher 21 im Gegenstrom verlaufen, ist beim alternativen Regelsystem 29 für den Regelwärmetauscher 1 ein Durchlaufen in gleicher Richtung vorgesehen, nämlich in den gezeigten Beispielen jeweils von oben nach unten. Dennoch kann der Regelwärmetauscher 1 identisch konstruiert sein.

Ein Regler 30 kann direkt am Regelwärmetauscher 1 angebracht sein, konkret am dortigen Temperaturmesser 23. Die Regelhysterese oder die Detektionsgenauigkeit des Reglers 30 kann beispielsweise +/- 2 °C betragen.

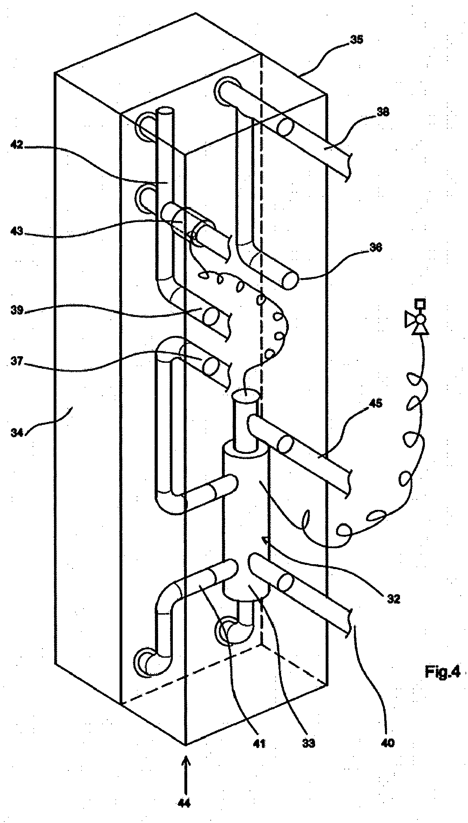

Ein Thermöstateinsatz 31 kann beispielsweise an einem unteren Ende des Regelwärmetauschers 1 vorgesehen sein. Jedenfalls macht es Sinn, den Thermostateinsatz dort zu platzieren, wo eine Leitung das zu erwärmende Trinkwasser zur Zapfstelle führt. Ein Thermostateinsatz kann beispielsweise einen Regelbereich von 35 °C bis 60 °C vorgeben können. Bei der Einbausituation in Figur 4 ist ein beispielhafter Regelwärmetauscher 32 mit einer Wärmedämmung 33 versehen.

Auf einen Hauptwärmetauscher 34 ist eine Wärmedämmschale 35 aufgesetzt. Anschlüsse für Trinkwasser 36 und für einen primären Heizungsvorlauf 37 sind ebenso vorhanden wie ein ZL-Anschluss 38 und Anschlüsse für einen primären Heizungsrücklauf 39, einen sekundären Heizungsvorlauf 40 für ein Wohnungsheizkreis sowie eine Weiterführung 41 des primären Heizungsvorlaufs 37 nach dem Durchlaufen des beispielhaften Regelwärmetauschers 32 hin zum Hauptwärmetauscher 34 und von dort über eine Leitung 42, auf welche eine Stellglied 43 Einfluss nimmt, hin zum primären Heizungsrücklauf.

In der gezeigten Installation wird also das Heizungswasser im Wesentlichen auf einer linken Seite 44 geführt. Dies erhöht die Übersichtlichkeit beim Anschließen des Regelsystems.

Gezapft wird bei der gezeigten Installation über einen Auslass 45 für Trinkwarmwasser.

Ein Regelwärmetauscher kann beispielsweise direkt auf dem Wärmetauscher montiert werden, wie dies in Figur 4 dargestellt ist. Alternativ ist ohne Weiteres denkbar, dass der Regelwärmetauscher an anderer Stelle oder auf einer Grundplatte montiert wird.

Es sei ausdrücklich betont, dass der Vorlauf den Regelwärmetauscher auch in umgekehrter Richtung durchströmen kann, und auch damit die Erfindung verwirklicht.

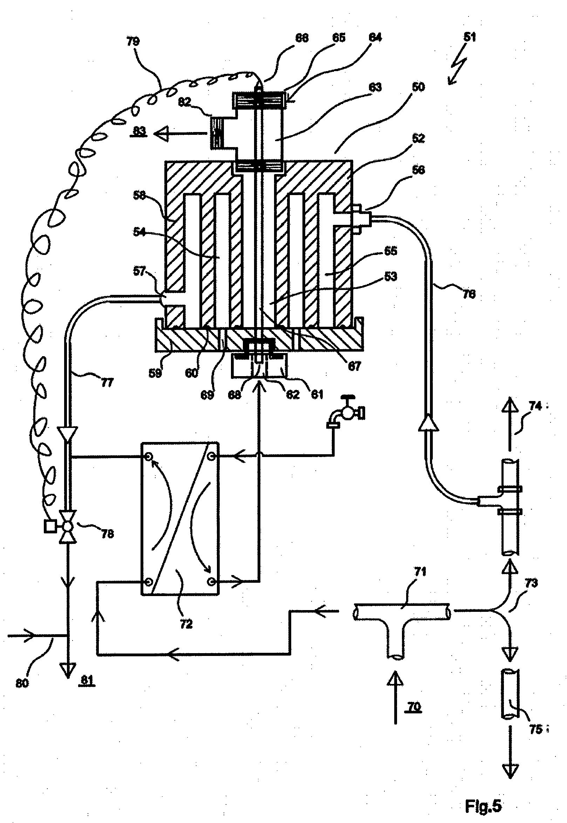

Der doppelwandige Regelwärmetauscher 50 in der dritten, weiter abgewandelten Einbausituation 51 in Figur 5 besteht im Wesentlichen aus einem Gehäuse 52, mit einem zentralen Kanal 53, einem darum angeordneten Sicherheitsringskanal 54 und einem diesen radial außen umgebenden Medienringkanal 55. Ein erster Anschluss 56 liegt in einem oberen Bereich des Gehäuses 52, ein zweiter Anschluss 57 liegt in einem unteren Bereich des Gehäuses 52. Der erste Anschluss 56 und der zweite Anschluss 57 sind direkt durch eine Gehäusewand 58 mit dem äußeren Medienringkanal 55 verbunden.

Ein Abschlussdeckel 59 dichtet den zentralen Kanal 53, den Sicherheitsringkanal 54 und den Medienringkanal 55 nach unten ab. Hierzu sind O-Ring-förmige Dichtungen 60 (exemplarisch gekennzeichnet) zwischen dem Gehäuse 52 und dem Abschlussdeckel 59 vorgesehen.

Der Abschlussdeckel 59 wird über ein Gewinde (nicht dargestellt) beim Aufschrauben des Abschlussdeckels 59 fest gegen die Dichtungen 60 und das Gehäuse 52 gezogen.

Für den zentralen Kanal 53 ist Anschlussstutzen 61 vorgesehen. Dieser bietet eine Zuführung 62.

An einem oberen Ende des Gehäuses 52 ist der zentrale Kanal 53 durch einen T-förmigen Stutzen 63, welcher ebenfalls über ein Schraubgewinde mit dem Gehäuse 52 fest verbunden ist, abgedichtet.

Der T-förmige Stutzen 63 verfügt an einem gerade durchgeführten Ende 64 über eine Schraubkappe 65, welche über eine Fixierung 66 einen Temperaturmesser 67 hält, welcher den gesamten zentralen Kanal 53 bis zum unteren Ende des doppelwandigen Regelwärmetauschers 50 durchläuft. Sein Temperaturmesspunkt liegt an seiner Spitze 68.

Zwischen dem Zentralkanal 53 und dem äußeren Medienringkanal 55 ist der Sicherheitsringkanal 54 vorgesehen. Dieser ist axial über eine Leckbohrung 69 nach außen geöffnet.

Ein primärer Heizungsvorlauf 70 wird an einem T-Stück 71 aufgeteilt und führt von dort aus einerseits zu einem Hauptwärmetauscher 72, andererseits wird der Heizungsvorlauf nach einer weiteren Aufteilung 73 einerseits als aufgeteilter primärer Heizungsvorlauf 74 und andererseits als sekundärer Heizungsvorlauf 75 weitergeführt.

Vom aufgeteilten primären Heizungsvorlauf 74 ist eine erste Kapillarrohrleitung 76 zum doppelwandigen Regelwärmetauscher 50 geführt. Sie mündet über den ersten Anschluss 56 in den Medienringkanal 55.

Auf der anderen Seite des doppelwandigen Regelwärmetauschers 50 ist vom zweiten Anschluss 57 eine zweite Kapillarrohrleitung 77 zu einem thermostatisch geregelten Ventil 78 geführt. Dieses enthält Daten über die Temperatur an der Spitze 68 des Temperaturmessers 67 über eine Datenleitung 79.

Stromab des thermostatisch geregelten Ventils 78 wird ein sekundärer Heizungsrücklauf 80 wieder zugeführt, sodass letztendlich ein primärer Heizungsrücklauf 81 als Gegenstück zum primären Heizungsvorlauf 70 rückgeführt werden kann.

Schließlich ist vom T-förmigen Stutzen ein Abfließanschluss 82 für Trinkwarmwasser zu einer Zapfstelle 83 vorgesehen.

Das Prinzip des doppelwandigen Regelwärmetauschers 50 in der dritten Einbausituation 51 ist im Wesentlichen vergleichbar mit der Einbausituation aus Figur 2.

Die Doppelwandigkeit des doppelwandigen Regelwärmetauschers 50 erhöht jedoch die Trinkwassersicherheit, da nicht nur eine Trennwand zwischen dem Trinkwasser und dem Heizungswasser vorliegt.

Außerdem ist der doppelwandige Regelwärmetauscher - unabhängig von der erhöhten Sicherheit für das Trinkwasser - an einem Bypass, bestehend aus der ersten Kapillarrohrleitung 76 und der zweiten Kapillarrohrleitung 77, angeschlossen, sodass der doppelwandige Regelwärmetauscher 50 nicht mit vollem Volumenstrom durchflossen werden muss.

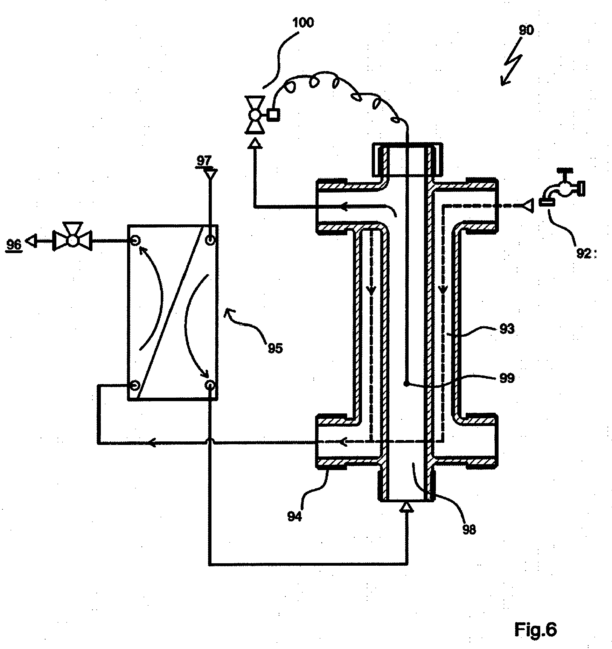

Im stark vereinfachten Einbauschema in der vierten Einbausituation 90 in Figur 6 ist ein einwandiger Regelwärmetauscher 91 so angeschlossen, dass ein Trinkwasserzulauf 92 oben in einen Ringkanal 93 mündet und anschließend an einem Trinkwasserauslass 94 zu einem Hauptwärmetauscher 95 geführt ist. Dort kann es zu einer Zapfstelle 96 für Trinkwarmwasser entnommen werden.

Ein primärer Vorlauf 97 führt im Gegenstrom durch den Hauptwärmetauscher 95 und anschließend ebenfalls im Gegenstrom durch einen zentralen Kanal 98 im Regelwärmetauscher 91.

Im zentralen Kanal 98 ist eine Temperaturmessspitze 99 für ein thermostatisch geregeltes Ventil 100 angeordnet.

Wenn im Betrieb der vierten Einbausituation 90 das Trinkwasser beispielsweise mit einer Temperatur von etwa 10 °C den Regelwärmetauscher 91 durchströmt, interagiert dieses in bereits bekannter Weise mit dem Wasser aus dem primären Vorlauf 97, welches beispielsweise mit einer Temperatur von 65 °C zum Hauptwärmetauscher 95 gelangen kann.

Im Hauptwärmetauscher 95 kann es beispielsweise 30 °C seiner Temperatur während des Wärmetauschs gegen das Trinkwasser verlieren.

An der Temperaturmessspitze werden kann beispielsweise nur noch 30 °C oder 35 °C gemessen. Die Temperaturmessung erfolgt in der vierten Einbausituation 90 in einem Rücklauf des primären Heizungsvorlaufs.

Das primäre hydraulische Netz kann im Idealfall nur ab einer Unterscheidung der eingestellten Rücklauftemperatur zusammenbrechen. Beispielsweise kann diese auf 30 °C eingestellt sein.

Die vierte Einbausituation bietet sehr hohe Sicherheit für das hydraulische Netz im Primärsystem. Dort wird die exakte Temperatur gemessen.

Um einen sicheren Zugriff auf die Warmwassertemperatur an der Zapfstelle 96 zu erhalten, ist dort bevorzugt ein Mischventil oder ein Kombiregler mit zwei Kapillarrohrleitungen vorgesehen und wird automatisch eingeregelt. Die Kapillarrohrleitungen können am Trinkwarmwasser und am primären Rücklauf angeschlossen sein.

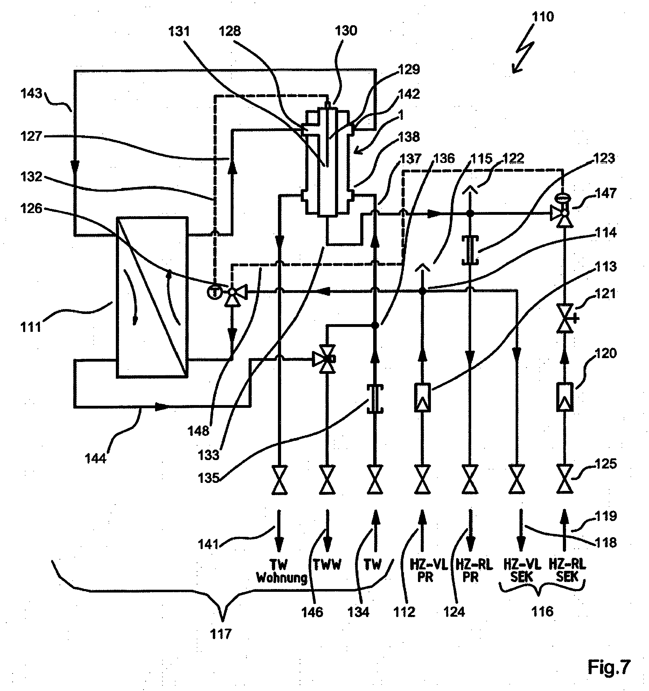

Der Regelwärmetauscher 1 in der fünften Einbausituation 110 in Figur 7 ist wiederum verbunden mit einem Hauptwärmetauscher 111.

Ein primärer Heizungsvorlauf 112 führt zunächst durch einen ersten Schmutzfänger 113 zu einer Vorlaufverzweigung 114 mit einer ersten Entlüftung 115.

Dort verzweigt sich der primäre Heizungsvorlauf 112 einerseits zu einem sekundären Heizkreislauf 116, andererseits in eine Regel- und Heizschaltung 117.

Das heiße Heizungswasser aus dem primären Heizungsvorlauf 112, welches in den sekundären Heizkreislauf 116 geführt wird, speist dort in herkömmlicher Weise einen sekundären Heizungsvorlauf 118 und wird nach Durchströmen der beispielsweise in einer Wohnung vorgehaltenen Heizkörper über einen sekundären Heizungsrücklauf 119 durch einen zweiten Schmutzfänger 120 an einem Zonenventil 121 an einer zweiten Lüftung 122 über ein Passstück 123 zurück zu einem primären Heizungsrücklauf 124 geführt.

Beispielhaft für die Heizkörper sind zwei Kugelhähne 125 (exemplarisch beziffert) dargestellt.

Das Zonenventil 121 hat beispielsweise einen einstellbaren Kvs-Wert im Bereich zwischen 0,06 und 0,9. Es ist beispielsweise voreingestellt auf 0,5.

Das Passstück 123 ist beispielsweise ausgeführt als ein Passstück WMZ 110 mm x ¾".

Innerhalb der Regel- und Heizschaltung 117 ist der primäre Heizungsvorlauf 112 zunächst an einem Eckventil 126 entlanggeführt. Das Eckventil 126 ist bei anderen Einbausituationen kein zwingender Bestandteil der Erfindung, hier aber konstruktiv vorgesehen. Es handelt sich beispielsweise um ein Eckventil 126 mit einem TM-Einsatz und einem Kvs-Wert von 3,5.

Nach dem Eckventil 126 ist der primäre Heizungsvorlauf 112 zum Hauptwärmetauscher 111 geführt. Bei diesem kann es sich beispielweise um einen kupfergelöteten Edelstahlplatten-Wärmetauscher mit einer Isolierschale (nicht dargestellt) handeln.

Nach Durchlaufen des Hauptwärmetauschers 111 wird der primäre Heizungsvorlauf 112 zum primären Heizungsrücklauf 124. Als solcher durchfließt er zunächst eine erste Verbindungsleitung 127, welche von einem Ausgang des Hauptwärmetauschers 111 zu einem Heizungsrücklaufeinführstutzen 128 führt. Dieser geht in einen zentralen Kanal 129 über. In diesem ist ein Temperaturmessfühler 130 mit einer Messspitze 131 vorgesehen. Die Messspitze 131 befindet sich etwa in der Mitte des zentralen Kanals 129. Sie misst deshalb die Temperatur des primären Heizungsrücklaufs 124 innerhalb des Regelwärmetauschers 1.

Über den Temperaturmessfühler 130 ist das Eckventil 126 geregelt. Es kann beispielweise einen Regelbereich von 20 °C bis 50°C haben und im hier vorliegenden Beispiel auf 28 °C Regeltemperatur eingestellt sein. Die Regeltemperatur kann verstellbar sein.

Eine erste Kapillarrohrleitung 132 verbindet den Temperaturmessfühler 130 mit dem eigentlichen Regler am Eckventil 126, wobei durch die erste Kapillarrohrleitung 132 entweder die Daten der Temperaturmessspitze 131 oder beispielsweise nur ein Steuerstrom geleitet werden.

Nach Durchlaufen des zentralen Kanals 129 im Regelwärmetauscher 1 durchläuft der primäre Heizungsrücklauf 124 einen Thermosiphon 133 und wird von dort aus zum zurückströmenden sekundären Heizungsrücklauf 119 und zum Passstück 123 geführt.

Kaltes Trinkwasser 134 von einer Trinkwasserspeisung strömt in die Regel- und Heizschaltung 117 zunächst entlang einem optionalen zweiten Passstück 135, beispielsweise ausgeführt als Passstück KWZ 110 mm x ¾".

An einer Trinkwasserverzweigung 136 führt ein zu erwärmender Strang 137 zum Regelwärmetauscher 1 und dort zu einem ersten Anschluss 138. Der erste Anschluss 138 befindet sich an einem unteren Ende des Regelwärmetauschers 1, nahe des Austritts des zentralen Kanals 129, entgegengesetzt zum Leitungswassereinführstutzen 128 des primären Heizungsrücklaufs 124.

Am selben Ende 139 des Regelwärmetauschers 1 befindet sich ein erster Auslass 140 für das Trinkwasser 134, von wo aus das Trinkwasser 134 ohne Erwärmung direkt zu einer Kaltwasserspeisung 141 zu beispielsweise einer Wohnung führt.

Am gegenüberliegenden Ende des Regelwärmetauschers 1 findet sich ein zweiter Auslass 142, von welchem aus eine zweite Verbindungsleitung 143 zum Hauptwärmetauscher 111 führt. Nach Durchlauf des Hauptwärmetauschers 111 befindet sich für das zu erwärmende Trinkwasser aus der zweiten Verbindungsleitung 143 eine Warmwasserleitung 144, welche zu einem Temperaturmischmittel 145 führt. Bei dem Temperaturmischmittel 145 kann es sich beispielsweise um ein T-Mix-Ventil handeln, mit einem Kvs-Wert von 1,2 m³/h, für einen Bereich von 35 °C bis 60. °C.

Das Temperaturmischmittel 145 kann Wasser aus der Warmwasserleitung 144 oder direkt von der Trinkwasserverzweigung 136 kommend im beliebigen Verhältnis miteinander mischen und in eine Trinkwarmwasserleitung 146 speisen.

Die Zuleitung für Trinkwasser 134, die Kaltwasserspeisung 141 für beispielsweise eine Wohnung und die Trinkwarmwasserleitung 146 für dieselbe Wohnung sind jeweils bevorzugt über einen Kugelhahn mit DVGW-Zertifikat angeschlossen.

Im Betrieb der fünften Einbausituation 110 durchströmt das heiße Heizungsvorlaufmedium zunächst den Hauptwärmetauscher 111 und erst dann den Regelwärmetauscher 1, so dass im Regelwärmetauscher 1 sehr exakt die Rücklauftemperatur für das hydraulische Netz gemessen werden kann. Dies führt zu einer größtmöglichen Sicherhit im hydraulischen Netz.

Wenn durch den Wärmeübergang zwischen primären Heizkreisvorlauf 112 und dem zu erwärmenden Trinkwasser aus der zweiten Verbindungsleitung 143 das Warmwasser in der Warmwasserleitung 144 zu warm erzeugt wird, kann über das Temperaturmischmittel 145 die gewünschte Temperatur in der Trinkwarmwasserleitung 146 erzeugt werden.

Ein Differenzdruckregler 147 mit beispielsweise einem Kvs-Wert 2,5/0,1 bkr verbindet die Regel- und Heizschaltung 117, die sich beispielsweise in einer Wohnungsstation befinden kann, mit dem sekundären Heizkreislauf 116. Eine solche Konstellation ist auch unabhängig, insbesondere aber in Addition zu den übrigen vorgestellten Merkmalen einer Erfindung, vorteilhaft und wird als erfinderisch betrachtet. Mittels des Differenzdruckreglers 147, der über eine zweite Kapillarrohrleitung 148 verfügt, kann installationsseits sichergestellt werden, dass nicht über einen manuellen Eingriff eine unnötig hohe Menge an Heizungswasser in einen sekundären Kreislauf eingespeist wird. Damit kann bauseits manueller Fehlbedienung vorgegriffen werden, und das hydraulische Netz wird wiederum im Betrieb stabilisert.

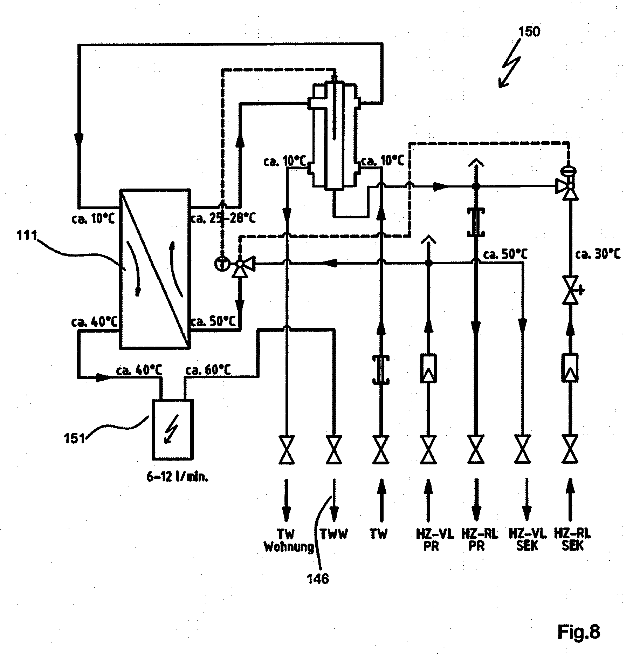

Die sechste Einbausituation 150 in Figur 8 ist im Wesentlichen wie die fünfte Einbausituation aus Figur 7 aufgebaut. Es ist jedoch auf dem Weg vom Hauptwärmetauscher 111 zur Trinkwarmwasserleitung 146 eine elektrische Nachheizstation 151 zusätzlich vorgesehen.

Generelle Überlegungen, konkrete Beschreibungen und erfinderische Ansätze zu einer elektrischen Station in Form einer Hybridheizung können der nicht veröffentlichten europäischen Patentanmeldung 11002499.9, eingereicht am 25. März 2011 auf den Namen desselben Anmelders, entnommen werden. Auf den gesamten Offenbarungsgehalt dieser Patentanmeldung wird hier im Wege der Referenzierung derart Bezug genommen, dass der dortige Offenbarungsgehalt auch hier als Inhalt der Patentanmeldung gelten soll.

Eine Kopie der Anmeldeunterlagen wird anliegend mit eingereicht, wobei die dortigen "Patentansprüche" hier anliegend zu "bevorzugten Merkmalssammlungen" umbenannt wurden, um deutlich bleiben zu lassen, mit welcher Anspruchsfassung die hiesige Patentanmeldung zunächst in das Verfahren eintreten soll.

Beispielhaft können folgende Temperaturwerte im Betrieb der Einbausituation 150 auftreten:

Das kalte Trinkwasser hat eine Temperatur von 10 °C. Die vorgestellte Aufbauvariante funktioniert allerdings ohne Weiteres auch mit Temperaturen bis zu 20 °C oder sogar 25 °C.

Für den Heizungsvorlauf reichen Temperaturen von ca. 50 °C vollkommen aus, Der Rücklauf aus dem sekundären Heizungskreis beträgt dann beispielsweise ca. 30 °C.

Im Hauptwärmetauscher 111 gibt der primäre Heizungsvorlauf von seinen etwa 50 °C knapp die Hälfte ab, also beispielsweise beträgt die Temperatur im primären Heizungsrücklauf 25 °C bis 28 °C. Diese kann im Regelwärmetauscher 1 gemessen werden.

Die vom primären Heizungsvorlauf im Hauptwärmetauscher 111 abgegebene Energiemenge kann beispielsweise zu einer Erwärmung des ursprünglich 10 °C kalten Trinkwassers auf etwa 40 °C führen. Der elektrische Nachheizer 151 kann das Warmwasser auf beispielsweise ca. 60 °C nachheizen. Gedacht sei beispielsweise an eine Ausführung mit einem Durchsatz zwischen 6 und 12 Litern pro Minute. Beispielhafte elektrische Leistungen zum Nachheizen wären wie folgt:
bei 6 l/min ca. 8,0 KW
bei 8 l/min ca. 11 KW
bei 10 l/min ca. 13 KW
ab 12 l/min ca. 16 KW

Mit anderen Worten formuliert betrifft ein beispielhafter Aspekt der Erfindung eine Wärmetauscherkombination aus einem Hauptwärmetauscher und einem Regelwärmetauscher.

Der Hauptwärmetauscher und der Regelwärmetauscher weisen Strömungskanäle für ein Primärmedium und ein Sekundärmedium auf, und diese Strömungskanäle sind in Serie geschaltet. Der Regelwärmetauscher weist einen Temperaturfühler auf, der über eine Steuerleitung mit einem Stellglied des Strömungskanals im Hauptwärmetauscher gekoppelt ist. Der Regelwärmetauscher weist eine wesentlich geringere Trägheit als der Hauptwärmetauscher aus.

Sobald Primärmedium durch den Regelwärmetauscher und eine Schaltstelle des Temperaturfühlers durchlaufen wird, veranlasst der Temperaturfühler über die Steuerleitung eine Öffnung des Stellgliedes für das Primärmedium im Hauptwärmetauscher. Dies führt dazu, dass Primärmedium sowohl durch den Hauptwärmetauscher als auch durch den in Serie geschalteten Regelwärmetauscher fließt. Dabei wird Wärmeenergie vom Primärmedium zum Sekundärmedium übertragen. Das Sekundärmedium im Regelwärmetauscher wird dabei erwärmt oder gekühlt und die Schaltschwelle des Temperaturfühlers in umgekehrter Richtung durchlaufen. Über die Steuerleitung wird nun das Stellglied im Hauptwärmetauscher geschlossen oder gedrosselt, bis sich ein stationärer Zustand einstellt.

Das Stellglied im Hauptwärmetauscher befindet sich auf der Auslassseite des Primärmediums. Sofern das Primärmedium ein Heizmedium ist, durchströmt es den Hauptwärmetauscher von unten nach oben. Hingegeben durchströmt es den Regelwärmetauscher von oben nach unten. Der Regelwärmetauscher ist hinsichtlich des Primärmediums dem Hauptwärmetauscher vorgeschaltet, sodass warmes Primärmedium zunächst in den Regelwärmetauscher gelangt. Hinsichtlich des Sekundärmediums ist der Regelwärmetauscher in Serie hinter dem Hauptwärmetauscher angeordnet.

Wenn eine Zapfstelle für Primärmedium geöffnet wird, strömt kaltes Sekundärmedium vom Hauptwärmetauscher durch den Regelwärmetauscher. Da beim strömenden Sekundärmedium der Wärmeübergang im Regelwärmetauscher nicht ausreicht, um Sekundärmedium zu erwärmen, stellt der Temperaturfühler ein Unterschreiten der eingestellten Solltemperatur fest und steuert das Stellglied im Primärkanal des Hauptwärmetauschers auf. Das durch Hauptwärmetauscher fließende Sekundärmedium wird daraufhin erwärmt. Wird die Zapfstelle geschlossen, so erwärmt das Primärmedium das im Regelwärmetauscher stehende Sekundärmedium über den eingestellten Soll-Wert hinaus, woraufhin ein Temperaturfühler das Stellglied des Primärmediumkanals schließt.

Gemäß einer Weiterbildung kann vom Regelwärmetauscher ein Bypass parallel zum Hauptwärmetauscher geführt sein, der einen sehr geringen Primärmediumstrom durchlässt. Diese Maßnahme dient dazu, den Regelwärmetauscher bei geschlossener Zapfstelle im Sekundärkreis auf Temperatur zu halten, ohne dass das Stellglied im Hauptwärmetauscher für den Primärkanal immer wieder geöffnet werden müsste.

Der Regelwärmetauscher ist unter Umständen koaxial ausgebildet. Dabei können die Gehäuseteile so verdreht werden, dass Einlässe und Auslässe für das Primärmedium in unterschiedliche Richtungen gedreht werden können, um den Anschluss an unterschiedliche Leitungen zu erleichtern. Das primärmediumführende Rohr kann zwecks besserer Wärmeübertragung auch mit Äußeren Rippen versehen sein, sodass eine größere Fläche für den Wärmeübergang zur Verfügung steht.

Zusätzlich zeigen die beiden weiteren Zeichnungen zwei weitere Schaltschemata, welche im Rahmen der Erfindung liegen können. Dabei wird als selbständig ("unabhängig") vorteilhafter Aspekt offenbart, dass eine Kaltwasserrückführung immer durch den Regler-Wärmetauscher geführt wird, bevorzugt nur durch einen kleinen Weg dort, sodass es regelmäßig zu einem kurzen Anlaufen kommt.

Andere Aspekte, welche mit den vorstehend beschriebenen Erfindungsaspekten kombinierbar sind, betreffen ein Verfahren zum Erwärmen von Trinkwasser und Bereitstellen als Trinkwarmwasser, ein Haustechniksystem, eingerichtet zum Durchführen eines solchen Verfahrens, eine Wohnungsstation sowie ein Gebäude oder einen Mehrgebäudekomplex.

Trinkwasser kann in einem Gebäude je nach Ort und Jahreszeit mit einer Temperatur von meist zwischen 10 °C und 15 °C gezapft werden.

Um das kalte Trinkwasser zu Trinkwarmwasser zu erwärmen, sodass es Trinkwarmwassertemperatur hat, sind unterschiedliche Maßnahmen bekannt.

Außerdem sind im Rahmen von Gebäudetechnik zentrale Heizungsanlagen bekannt. Ausgehend von einer Zentralheizung führt ein Primärheizungsvorlauf zu den einzelnen Wohnungen. Dort wird das Heizungswasser aus dem Primärheizungsvorlauf in einer Primärheizungstemperatur genutzt, um einen Sekundärheizungsvorlauf zu speisen, also den Vorlauf durch die Heizkörper der Wohnung. Bei der Nutzung gibt das Heizungswasser Wärmeenergie ab und fließt in einer kühleren Primärheizungsrücklauftemperatur über den Primärheizungsrücklauf zurück zur Zentralheizung.

Der nachstehend beschriebenen Erfindung liegt die Aufgabe zu Grunde, ein sehr effektives System zum Erwärmen von Trinkwasser zu entwickeln.

Nach einem ersten Aspekt der Erfindung löst diese Aufgabe ein Verfahren zum Erwärmen von Trinkwasser und Bereitstellen als Trinkwarmwasser mit einer Trinkwarmwassertemperatur in einer Wohnung, unter Nutzung eines Primärheizungsvorlaufs und eines Primärheizungsrücklaufs wobei Heizungswasser von einer Zentralheizung über den Primärheizungsvorlauf in einer Primärheizungsvorlauftemperatur zur Wohnung gefördert wird und nach Nutzung in einer kühleren Primärheizungsrücklauftemperatur über den Primärheizungsrücklauf zur Zentralheizung zurückgefördert wird, wobei die Nutzung des Heizungswasser und das Erwärmen des Trinkwassers in einer Wohnungsstation erfolgen, wobei in der Wohnungsstation zwei sich ergänzende Erwärmungsstufen unterschiedlichen Prinzips zum Erwärmen des Trinkwassers vorgesehen sind, nämlich eine mittels eines Wasser-Wasser-Wärmetauschers und eine mittels eines elektrischen Nachheizers.

Begriff sei zunächst erläutert, dass im Rahmen der hier vorliegenden, von hier an beschriebenen Erfindung eine "Wohnung" nicht zwingend eine solche Gebäudeeinheit sein muss, welche tatsächlich zum Wohnen durch einen oder mehrere Menschen verwendet wird. Vielmehr sei als eine Wohnung eine Gebäudeeinheit verstanden, welche sich gegenüber einer zentralen Gebäudestruktur individuell abgrenzt. Es kann sich also um eine Wohnung handeln, aber genau so gut um ein Büro oder ein Ladengeschäft oder sogar um ein eigenständiges Gebäude, welches mit anderen Gebäudeteilen zu einem Mehrgebäudekomplex hinsichtlich der Haustechnik zusammengeschlossen ist.

Der Einfachheit halber wird im Rahmen der folgenden Beschreibung durchgehend von einer "Wohnung" gesprochen, ohne die übrigen Varianten jeweils mit aufzuzählen.

Als eine "Wohnungsstation" wird ein im Zusammenhang miteinander stehender Haustechnikinstallationsbereich bezeichnet, beispielsweise an einer hierfür vorgesehenen Stelle zum Zusammenführen der Installationen innerhalb einer Wohnung mit der Installation außerhalb der Wohnung zur Zentralheizung.

Bei mehreren Wohnungen werden in der Regel mehrere Wohnungsstationen vorhanden sein, nämlich pro Wohnung im Normalfall genau eine.

Der Erfinder hat erkannt, dass es bei einem Verfahren wie im ersten Aspekt der Erfindung vorgeschlagen, zu einem sehr effizienten Nutzen von Energie kommen kann. Aus variablen Bedingungen, beispielsweise aus gleitenden Heizungsvorlauftemperaturen, kann wegen des elektrischen Nachheizers immer zuverlässig die gewünschte Trinkwarmwassertemperatur bereitgestellt werden.

Auch kann mittels der elektrischen Nachheizung, vor allem bei einer Steuerung oder Regelung, wobei der Einfachheit halber im Rahmen der hiesigen Beschreibung immer nur von einer "Steuerung" gesprochen wird, aber darunter beides verstanden werden soll, die möglicherweise ansonsten fehlende Energie bei zu geringen Heizungsvorlauftemperaturen vor allem in der Übergangszeit oder im Sommer beigesteuert werden.

Um das Trinkwasser auf Trinkwarmwassertemperatur zu erwärmen, ist es denkbar, dass als erste Erwärmungsstufe das Trinkwasser im Wasser-Wasser-Wärmetauscher teilerwärmt und als zweite Erwärmungsstufe sanitärseitig des Wasser-Wasser-Wärmetauschers das teilerwärmte Trinkwasser mittels des elektrischen Nachheizers auf Trinkwarmwassertemperatur resterwärmt wird.

Als "sanitärseitig" sei ein Teil der Haustechnikinstallation zu verstehen, welcher vom Wasser-Wasser-Wärmetauscher hin zur Wohnung gerichtet ist, also auf der anderen Seite von der Zentralheizung.

Alternativ ist es zum Erwärmen des Trinkwassers möglich, als erste Erwärmungsstufe vom Primärheizungsvorlauf stammendes Heizungswasser mittels des elektrischen Nachheizers nachzuheizen und als zweite Erwärmungsstufe sanitärseitig des elektrischen Nachheizers das Trinkwasser im Wasser-Wasser-Wärmetauscher mittels des nachgeheizten Heizungswassers auf Trinkwarmwassertemperatur zu erwärmen.

Weiter alternativ ist denkbar, das Trinkwasser zu erwärmen, indem als erste Erwärmungsstufe vom Primärheizungsvorlauf stammendes Heizungswasser mittels des elektrischen Nachheizers nachgeheizt wird, dann als zweite Erwärmungsstufe das Trinkwasser sanitärseitig des elektrischen Nachheizers im Wasser-Wasser-Wärmetauscher mittels des nachgeheizten Heizungswassers teilerwärmt wird und als dritte Erwärmungsstufe das teilerwärmte Trinkwasser sanitärseitig des Wasser-Wasser-Wärmetauschers mittels eines weiteren elektrischen Nachheizers auf Trinkwassertemperatur resterwärmt wird.

Ausdrücklich sei betont, dass im Rahmen der hier vorliegenden Anmeldung unbestimmte Zahlenangaben als "mindestens"-Angaben zu verstehen sind, sofern sich nicht im Einzelfall ergibt, dass "genau" diese Zahl gemeint ist. "Genau" die genannte Anzahl ist allerdings jeweils als eine bevorzugte Ausführung zu verstehen.

Beispielhaft hierfür fällt unter eine geforderte Anzahl zweier Erwärmungsstufen auch die hier nun vorgestellte Variante mit drei Erwärmungsstufen.

Die vorstehenden beispielhaften Ausführungsvarianten des ersten Erfindungsaspekts ermöglichen allesamt eine optimierte Energiezuführung von der Heizungsseite, um möglichst kalte Heizungsrücklauftemperaturen zu erzielen. Dies ist nicht nur deshalb von Vorteil, weil dann im Heizungsrücklauf wenig Wärmeenergie ungezielt abgegeben wird. Auch eine etwa vorhandene Wärmepumpe funktioniert besonders gut, wenn die Temperatur im Heizungsrücklauf möglichst niedrig ist.

Gleichzeitig kann die Energiezuführung von der Elektroseite zur Nachheizung optimiert werden, um möglichst nur diejenige Menge an Energie elektrisch nachzuheizen, welche wirklich benötigt wird, um die gewünschte Trinkwarmwassertemperatur zu erreichen.

In Folge dessen, dass ein elektrischer Nachheizer vorhanden ist, kann Energie zur Warmwasserbereitung ohne Vorlaufzeit zur Verfügung gestellt werden.

Bei sämtlichen Ausführungsvarianten und bei weiteren nicht ausdrücklich genannten Ausführungsvarianten der Erfindung gemäß hier genannten ersten Aspekt kann Warmabwasser durch einen Rückgewinnungs-Wärmetauscher geführt werden, um Wärmeenergie aus dem Warmabwasser rückzugewinnen und mit der rückgewonnenen Wärmeenergie zum Erwärmen des Trinkwassers beizutragen, wobei das Warmabwasser insbesondere durch den genannten Wasser-Wasser-Wärmetauscher in der Wohnungsstation geführt werden kann.

Bei einer solchen Ausgestaltung des Verfahrens bzw. eines damit korrespondierenden Hautechniksystems wird die ansonsten ungenutzt abfließende Wärme zumindest zum Teil rückgewonnen und nochmals genutzt. Ein solches Verfahren ist vor allem dann sinnvoll anwendbar, wenn Warmabwasser aus einem Duschenabschluss oder einem Waschbeckenabfluss verwendet wird. Alternativ oder kumulativ können Waschmaschinen, Waschtrockner, Wasserabläufe von sich unter Sonneneinstrahlung aufheizenden Dächern oder Spülmaschinen usw. jeweils warmes Abwasser zur Wärmerückgewinnung bereitstellen.

Die Primärheizungsvorlauftemperatur kann bevorzugt zwischen etwa 38 °C und maximal etwa 60 °C gehalten werden, insbesondere konstant. Besonders gut kann das System allerdings mit gleitenden Primärheizungsvorlauftemperaturen umgehen. Diese können auch vor allem innerhalb des genannten Temperaturspektrums liegen.

Die Primärheizungsrücklauftemperatur liegt bevorzugt so niedrig wie möglich, vor allem zwischen 20 °C und 45 °C, insbesondere zwischen etwa 25 °C und etwa 35 °C, wobei die Primärheizungsrücklauftemperatur variabel sein kann. Das vorgeschlagene Verfahren und das damit korrespondierende Haustechniksystem sind so flexibel, dass sie ohne Weiteres mit einer variablen Primärheizungsrücklauftemperatur umgehen können. Es macht daher wenig Sinn, ein übermäßiges aufwendiges Regelsystem einzusetzen, um eine möglichst gleichmäßige Primärheizungsrücklauftemperatur zu erreichen.

Es wird vorgeschlagen, dass während des Durchführens des vorstehend beschriebenen Verfahrens eine Verbrauchs- und Zustandsgrößenerfassung durchgeführt wird, wobei ermittelte Verbrauchs- und Zustandsgrößen von der Wohnungsstation an eine Steuerung für die Zentralheizung übermittelt werden.

Mit einer solchen Rückkopplung kann die Steuerung der Zentralheizung alle Werte so anpassen, wie sie sich aus den ermittelten Verbrauchs- und Zustandsgrößen am besten errechnen. Die Steuerung kann sich selbst zu einem Idealwert iterieren, weil sie die eingestellten Soll-Werte durch gemessene Ist-Werte abgleichen kann.

Außerdem lassen sich Trinkwarmwasser, Trinkaltwasser und Heizungsverbrauch einfach in einer zentralen Steuerung erfassen. Dies erleichtert die Abrechnung mit den Inhabern der einzelnen Wohnungsstationen.

Die dezentralen Stationen können mit der Heizzentrale mittels eines Datenaustauschers hinsichtlich der Verbräuche von Trinkwarmwasser, Trinkwasser, Heizungsvorlauftemperatur, Heizungsrücklauftemperatur, elektrische Nachheizung, Volumenströme usw. verknüpft sein.

Recht leicht lässt sich aus diesen Werten auch der Endenergieverbrauch für jede einzelne Wohnung ermitteln.

Insgesamt ermöglicht die Netzverbindung zur zentralen Heizungsanlage ein sich selbst adaptierendes Gebäude. Die Steuerungstechnik kann intelligent programmiert sein, so dass sie bei bestimmten gegebenen Konditionen vor allem hinsichtlich der Außentemperatur und der Jahreszeit hinzulernen kann. Außerdem kann die Steuerung bevorzugt auf Energiepreise zugreifen, beispielsweise für Öl- oder Gaspreise sowie beispielsweise für die aktuellen Einspeiseertragspreise für aus Solarzellen gewonnenem Strom ins Stromnetz.

Die Steuerung kann entscheiden, wie sie lokal regenerativ gewonnenen Strom oder lokal regenerativ gewonnenes Heißwasser erzeugt oder zuführt. Regenerative Technologien werden auf diese Weise in einer bislang nicht bekannten vorteilhaften Weise kombiniert.

Zu dem elektrischen Nachheizer kann modular ein weiterer Nachheizer in die Wohnungsstation geschaltet werden. Auf diese Weise können unterschiedliche Leistungsklassen für die Warmwasserbereitung modular erzeugt werden.

Wenn ein Stellmotor vor einem Regler eingesetzt wird, kann sehr gut auf einen hydraulischen Abgleich Einfluss genommen werden. Dies ermöglicht es, nur eine maximal vorgesehene Energiemenge in die Wohnung einspeisen zu lassen. Selbst wenn - wie im Falle von Privatwohnungen oft der Fall - ein Bewohner einen technisch Zuständigen, beispielsweise den Hausmeister, bittet, die Menge zu erhöhen, kann sich dieser nicht über die elektronische Regelung hinwegsetzen.

Dies gilt auch dann, wenn der Solarstromanteil ohnehin erhöht ist und ausreichend Energie zur Verfügung steht. Weil der Heizungsvorlauf in Folge der mehrstufigen Erwärmung des Trinkwassers niedrig sein kann, zum Beispiel mit 45 °C, kann ein recht hoher Solarstromanteil benutzt werden. Beispielsweise können von einem Solarkollektor recht regelmäßig Temperaturen um die 40 °C bereitgestellt werden.

Alternativ oder kumulativ zum vorstehend beschriebenen ersten Aspekt der Erfindung löst die hier gestellte Aufgabe gemäß einem zweiten Aspekt der hier beschriebenen Erfindung ein Verfahren zum Erwärmen von Trinkwasser und Bereitstellen als Trinkwarmwasser mit einer Trinkwarmwassertemperatur in einer Wohnung, wobei Warmabwasser unterhalb einer Zapfstelle für Trinkwarmwasser aufgenommen und abgeführt wird, wobei zwei sich ergänzende Erwärmungsstufen unterschiedlichen Prinzips zum Erwärmen des Trinkwasser vorgesehen sind, nämlich eine mittels eines Rückgewinnungs-Wärmetauschers und eine mittels eines elektrischen Nachheizers, wobei als erste Erwärmungsstufe das abgeführte Warmabwasser zur Nutzung durch den Rückgewinnungs-Wärmetauscher geführt wird, um Wärmeenergie aus dem Warmabwasser rückzugewinnen und mit der rückgewonnenen Wärmeenergie das Trinkwarmwasser teilzuerwärmen, woraufhin als zweite Erwärmungsstufe sanitärseitig des Rückgewinnungs-Wärmetauschers das teilerwärmte Trinkwasser mittels des elektrischen Nachheizers auf Trinkwarmwassertemperatur resterwärmt wird.

Begrifflich sei hinsichtlich dieses Aspekts erläutert, dass hier anstelle des Heizungswassers oder zusätzlich zum Heizungswasser als Energiequelle aufgefangenes Warmabwasser unterhalb einer Zapfstelle verwendet wird, also beispielsweise Duschabwasser.

Bevorzugt werden beide Erwärmungsstufen in einer Wohnungsstation durchgeführt.

In einer bevorzugten Ausführungsvariante wird das Warmabwasser durch den im Rahmen des ersten Aspekts der Erfindung bereits beschriebenen Wasser-Wasser-Wärmetauschers in der Wohnungsstation geführt.

Es wird dann vorgeschlagen, dass das Warmabwasser einen Vorzug gegenüber anderweitiger Durchströmung erhält. Warmabwasser fällt nicht immer an. Wann immer es anfällt, kann der Zustrom von Heizungswasser daher reduziert oder gestoppt werden, so lange sich aus dem abgeführten Warmabwasser Energie rückgewinnen lässt.

Nach einem dritten Aspekt der Erfindung löst die gestellte Aufgabe ein Haustechniksystem, welches eingerichtet ist zum Durchführen eines vorstehend beschriebenen Verfahrens oder mehrerer der vorstehenden Verfahren und weiterer - mitunter auch einstufiger - Erwärmungsverfahren, wobei die Wohnungsstation wohnungsseitig oder heizungsseitig einer Übergabestelle in die Wohnung angeordnet sein kann.

In beiden Fällen kann die Wohnungsstation sehr kompakt ausgeführt werden und beispielsweise in einem bauseits vorhandenen Schacht untergebracht werden.

Die Wohnungsstation kann von einem Gehäuse umgeben sein. Dies ist die bevorzugte Aufbauform. In diesem Fall können die Anschlüsse sehr gut gekennzeichnet sein, und das gesamte System kann auf sehr kompakte Weise eingebaut und gewartet werden.

An der Wohnungsstation kann eine Anschlussmöglichkeit für einen Sekundärheizkreis vorgesehen sein, insbesondere durch die Wohnung führend.

Es wird vorgeschlagen, dass eine lernfähige Steuerung im Haustechniksystem vorgesehen ist, bevorzugt ebenfalls innerhalb des Gehäuses.

Bei einem Haustechniksystem mit mehreren Wohnungen wird vorgeschlagen, dass eine Mehrzahl dezentraler Wohnungsstationen vorgesehen ist, bevorzugt jeweils eine Wohnungsstation pro Wohnung.

Gemäß einem vierten Aspekt der Erfindung löst die gestellte Aufgabe eine Wohnungsstation mit einem Gehäuse, einem Wasser-Wasser-Wärmetauscher, einem elektrischen Nachheizer, einem Regler und mit Anschlüssen, so dass das vorstehend beschriebene Haustechniksystem errichtet werden kann.

Gemäß einem fünften Aspekt der Erfindung löst die gestellte Aufgabe ein Wohn- , Büro- und/oder Geschäftsgebäude oder Mehrgebäudekomplex mit einem vorstehend beschrieben Haustechniksystem und/oder mit einer Mehrzahl an Wohnungsstationen wie vorstehend beschrieben, wobei die Wohnungen entweder einheitlich oder nicht-einheitlich als privat bewohnte Wohnungen, als Büros oder als Ladengeschäfte eingerichtet sein können.

Schließlich wird vorgeschlagen, ein Wohn-, Büro- und/oder Geschäftsgebäude oder einen Gebäudekomplex mit einem Haustechniksystem wie vorstehend beschrieben nachzurüsten, wobei eine bauseits vorhandene Zirkulationsleitung verwendet und zum Nachrüsten umfunktioniert wird.

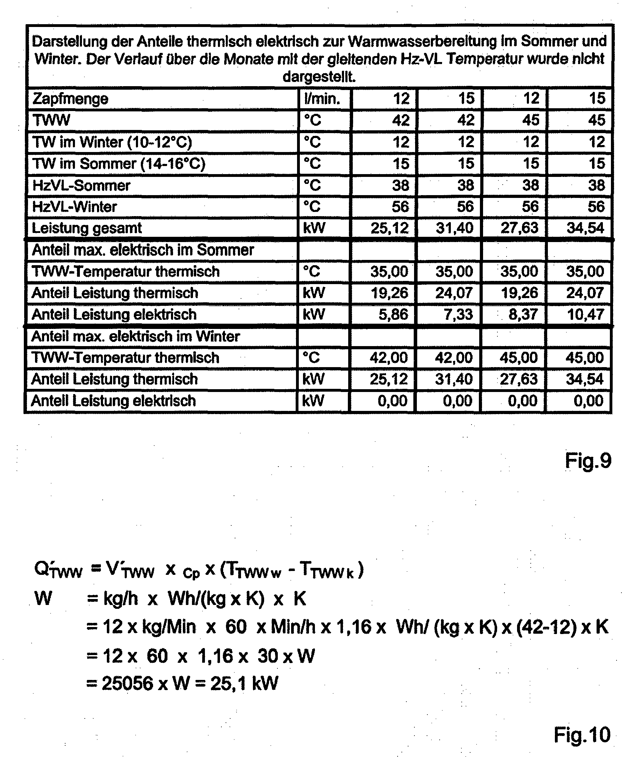

Die hier beschriebene Erfindung wird nachstehend anhand einiger Ausführungsbeispiele unter Bezugnahme auf die Zeichnung näher erläutert. Dort zeigen
- Figur 9: eine Tabelle mit beispielhaften Werten,
- Figur 10: eine Energiemengenberechnungsgleichung,

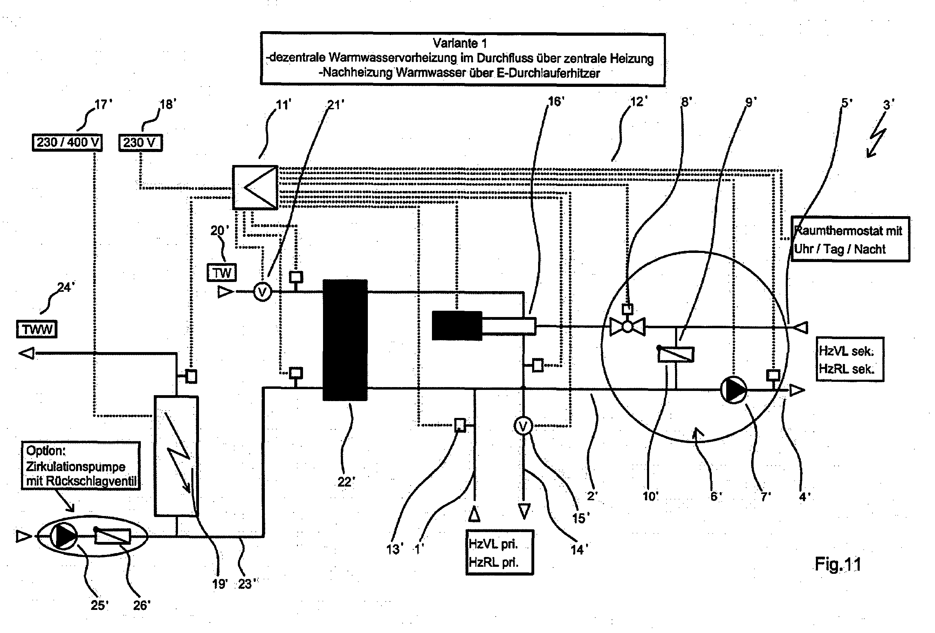

- Figur 11: schematisch eine Wohnungsstation in einer ersten Variante,

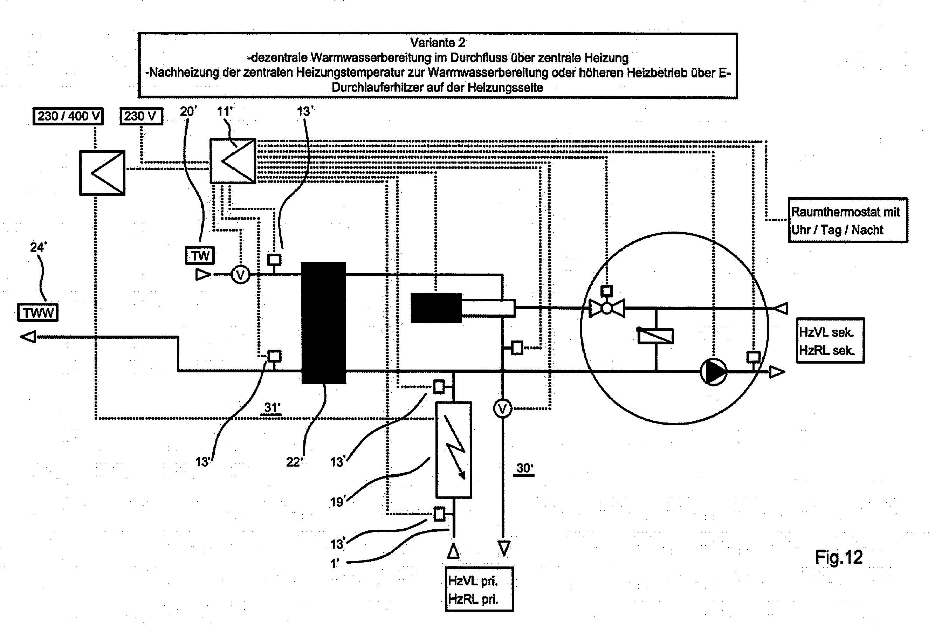

- Figur 12: schematisch eine Wohnungsstation in einer zweiten Variante,

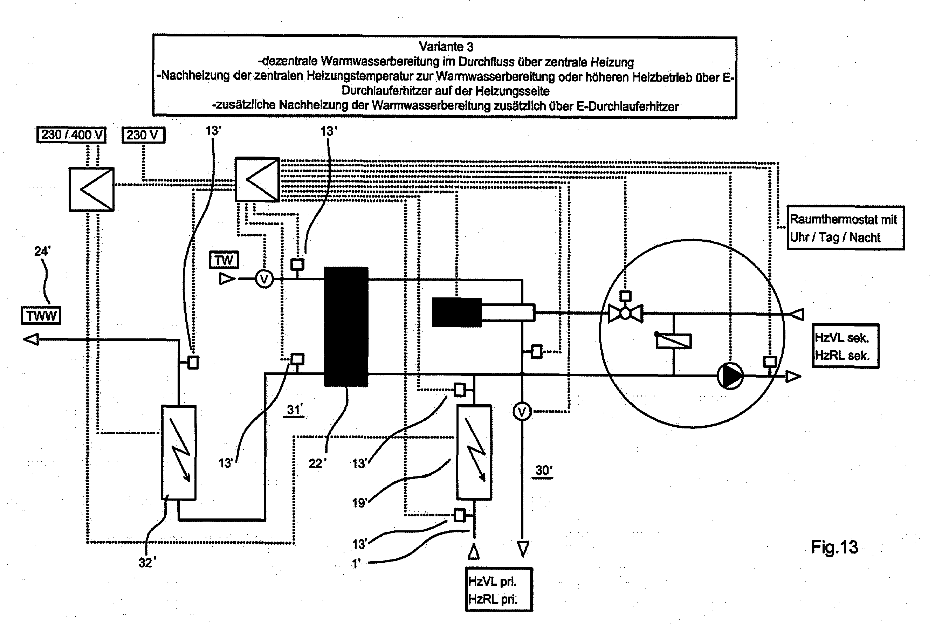

- Figur 13: schematisch eine Wohnungsstation in einer dritten Variante,

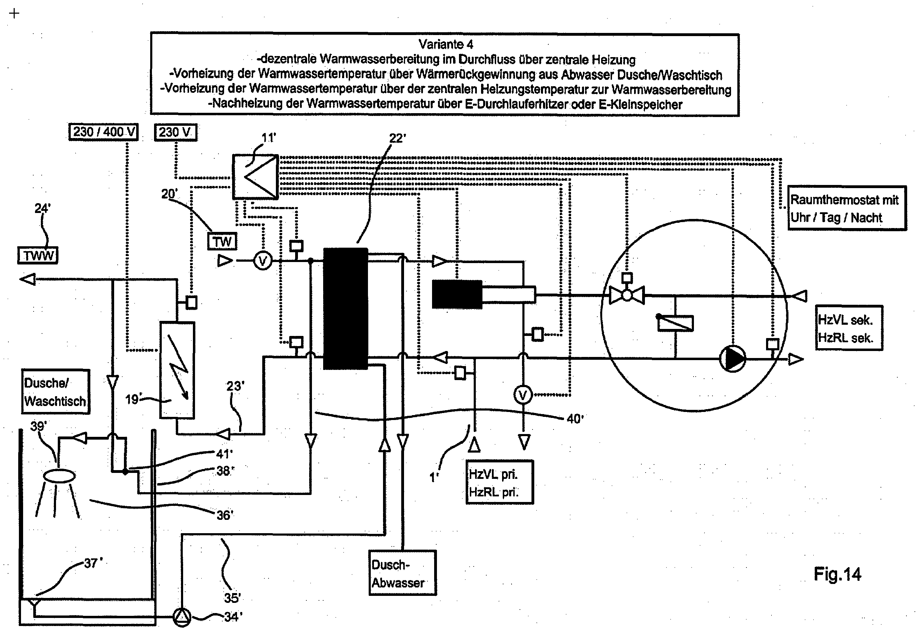

- Figur 14: schematisch eine Wohnungsstation in einer vierten Variante und

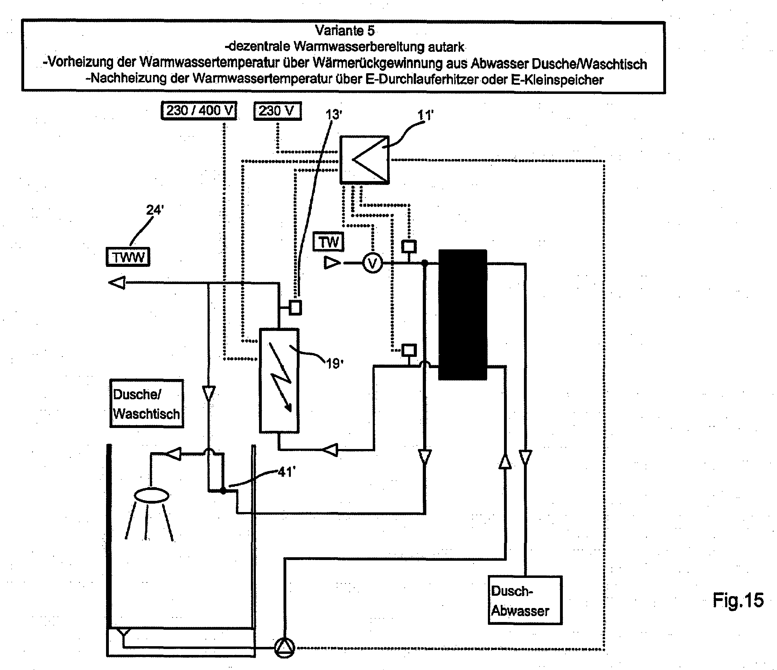

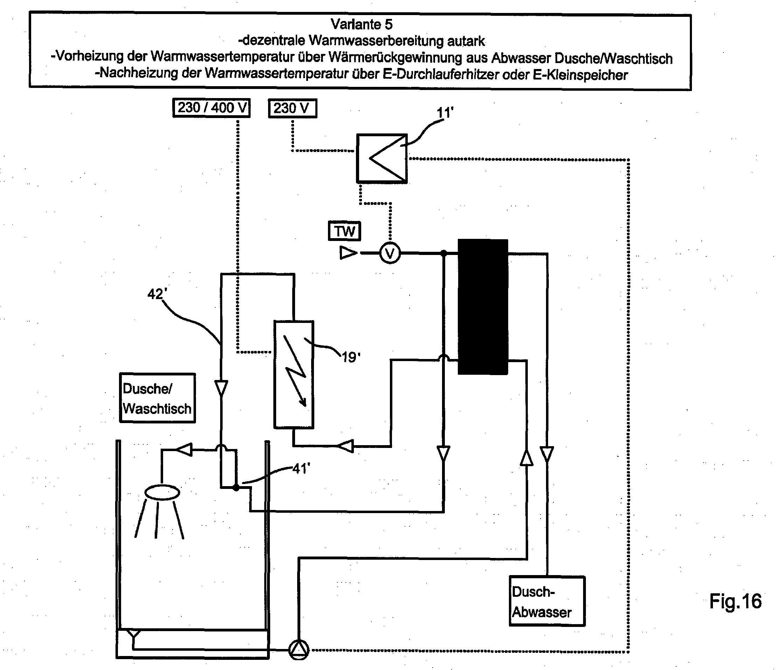

- Figuren 15, 16: schematisch eine Wohnungsstation in einer fünften Variante mit einer kleinen Abwandlung.

Die Tabelle in Figur 9 stellt die Anteile thermischer und elektrischer Anteile dar, welche zur Trinkwarmwasserbereitung im Sommer und im Winter verwendet werden können. Ein Verlauf über die Monate mit der gleitenden Heizungsvorlauftemperatur wurde nicht berücksichtigt, um die Darstellung einfacher zu gestalten.

Die erste Spalte beschreibt den Zeileninhalt. Die zweite Spalte beschreibt die Einheiten.

In der 3. und 5. Spalte ist jeweils eine geringe Zapfmenge angefordert, nämlich beispielsweise 12 l/min. In der 4. und 6. Spalte hingegen ist eine höhere Zapfmenge angefordert, nämlich 15 l/min.

In der 3. und 4. Spalte soll das Trinkwarmwasser auf 42 °C erhitzt werden, in der 5. und 6. Spalte hingegen auf 45 °C.

Der Heizungsvorlauf im Sommer wurde jeweils mit 38 °C angenommen, der Heizungsvorlauf im Winter mit 56 °C.

Rechnerisch ergibt sich bei der Erfindung, dass im Winter nicht elektrisch nachgeheizt werden muss, weil der Primärheizungsvorlauf mit 56 °C im Winter recht warm eingestellt ist. Dies gilt sogar, obwohl eine recht hohe Trinkwarmwassertemperatur verlangt wird.

Im Sommer hingegen wird die recht niedrige Trinkwarmwassertemperatur von 35 °C mit der zweistufigen Erwärmung erreicht. Es wird elektrisch nachgeheizt.

Das Haustechniksystem ist sowohl zum Trinkwassererwärmen mit einer Stufe als auch zum Trinkwassererwärmen mit zwei Stufen eingerichtet. Die Regelung schaltet die Erwärmungsstufen je nach Bedarf.

Die unterste angestrebte Puffertemperatur sollte zwischen 20 °C und 35 °C liegen. Dieser Wert ist zuverlässig normalerweise nur im Sommer zu erreichen. Mit steigender Heizlastanforderung ist die Rücklauftemperatur maßgeblich von der Auslegung der Heizflächen abhängig. Viel mehr, der hydraulische Abgleich ist optimal durchführbar und über die Hybrid-Wohnungsstation zu überwachen und gegebenenfalls über einen Stellantrieb zu schließen.

Eine möglichst gute Wärmedämmung der Vorlaufleitung sollte vorgesehen sein, um eine unerwünschte Auskühlung zu verhindern.

Ein beispielhafter Berechnungsweg zum Ermitteln der Tabelle in Figur 9 wird als Figur 10 beigefügt.

Bei der in Figur 11 schematisch dargestellten Wohnungsstation ist in einem Gehäuse (nicht dargestellt) eine Mehrzahl Anschlüsse vorhanden.

Ein Primärheizungsvorlauf 1 führt zu einer Verteilerleitung 2 innerhalb der Wohnungsstation 3. Diese führt einerseits zu einem Sekundärheizungsvorlauf 4, welcher über einen Sekundärheizungsrücklauf 5 wieder benutztes Heizungswasser in die Wohnungsstation 3 einspeisen kann.

Der sekundäre Heizkreis ist optional anschließbar. Er ist als ein Einspritzkreis 6 ausgeführt und weist eine Pumpe 7, ein Zwei-Wege-Ventil 8 und einen Bypass 9 mit Rückschlagventil 10 auf.

An einen elektrischen Regler 11 sind alle regelbaren Komponenten der Wohnungsstation 3 und alle Sensoren über elektrische Kabel 12 (exemplarisch gekennzeichnet) angeschlossen.

Unter anderem im Zulauf vom Primärheizungsvorlauf 1 zur Wohnungsstation 3 sind Temperaturfühler 13 (exemplarisch gekennzeichnet) angeordnet.

Im Primärheizungsrücklauf 14 ist ein Volumenstromzähler 15 angeordnet.

Der Zustrom zum Primärheizungsrücklauf 14 wird von einem Drei-Wege-Ventil 16 bestimmt.

Eine Spannungsquelle (17, 18) ist einerseits an den Regler 11 angeschlossen, andererseits an einen elektrischen Durchlauferhitzer 19.

Eine Trinkwasserquelle 20 führt entlang eines Volumenstromzählers oder Strömungsschalters 21 zu einem Wärmetauscher 22.

Von dort aus führt eine Leitung 23 für teilerwärmtes Trinkwasser durch den elektrischen Durchlauferhitzer 19 hindurch zu einer Trinkwarmwasser-Zapfstelle 24.

Optional ist eine Zirkulationspumpe 25 mit einem Rückschlagventil 26 angeschlossen.

Im Betrieb der Wohnungsstation 3 wird eine dezentrale Warmwasservorheizung im Durchfluss über die zentrale Heizung und das vom Primärheizungsvorlauf 1 stammende Heizungswasser im Wasser-Wasser-Wärmetauscher 22 erreicht. Das hierdurch benutzte und abgekühlte Heizungswasser fließt anschließend - geregelt durch das Drei-Wege-Ventil 16 - zurück zum Primärheizungsrücklauf 14.

Hierzu wird bei angeschlossenem Sekundärheizkreis das Wasser vom Sekundärheizungsrücklauf 5 gespeist.

Das kalte Trinkwasser von der Trinkwasserquelle 20 wird im Wasser-Wasser-Wärmetauscher 22 somit teilerwärmt und wird anschließend durch die Leitung 23 für das teilerwärmte Trinkwasser durch den elektrischen Durchlauferhitzer 19 geführt. Dort kann es elektrisch resterwärmt werden und sodann an der Zapfstelle 24 für Trinkwarmwasser in der gewünschten Temperatur entnommen werden.

Bei der in Figur 12 dargestellten zweiten Variante findet eine dezentrale Warmwasserbereitung im Durchfluss über die zentrale Heizung statt. Eine Nachheizung der zentralen Heizungstemperatur zur Warmwasserbereitung oder zum höheren Heizbetrieb findet über einen elektrischen Durchlauferhitzer 19 auf der Heizungsseite 30 des Wasser-Wasser-Wärmetauschers 22 statt. Auf einer Wohnungsseite 31 des Wasser-Wasser-Wärmetauschers 22 wird bei der zweiten Ausführungsvariante nicht mehr elektrisch nachgeheizt. Vielmehr wird das Heizungswasser im Primärheizungsvorlauf 1 durch den dort angeordneten elektrischen Durchlauferhitzer 19, der dann als elektrischer Nachheizer fungiert, auf eine so hohe Temperatur gebracht, dass die Wärmeübergangsleistung im Wasser-Wasser-Wärmetauscher 22 bereits ausreicht, um das kalte Trinkwasser von der Trinkwasserquelle 20 ohne weiteres elektrisches Nachheizen zur gewünschten Temperatur an der Zapfstelle 24 für Trinkwarmwasser zu erwärmen.

Die Temperaturerhöhung im Primärheizungsvorlauf 1 wird mit zwei Temperaturfühlern 13 (in allen Figuren nur exemplarisch beziffert) nachvollzogen. Bei Bedarf wird der elektrische Durchlauferhitzer 19 höher oder niedriger geregelt.

Der Regler 11 kennt die Temperatur des Trinkwassers außerdem über dort angeordnete Temperaturfühler 13 sowohl vor dem Wasser-Wasser-Wärmetauscher 22 als auch danach, also im direkten Zulauf zur Zapfstelle 24.

Der Durchlauferhitzer 19 kann ebenso zum Erreichen einer höheren Sekundärvorlauftemperatur in der Wohnung eingesetzt werden, wenn dort höhere Raumtemperaturen erreicht werden sollen als mit der vorgegebenen Primärvorlauftemperatur erreichbar wären.

Die in Figur 13 dargestellte dritte Variante der Wohnungsstation bewirkt ebenfalls eine dezentrale Warmwasserbereitung im Durchfluss über eine zentrale Heizung. Die Nachheizung der zentralen Heizungstemperatur zur Warmwasserbereitung oder zum höheren Heizbetrieb erfolgt über einen elektrischen Durchlauferhitzer 19 auf der Heizungsseite 30. Zusätzlich wird auf der Wohnungsseite 31 mit einem ergänzenden elektrischen Durchlauferhitzer 32 das teilerwärmte Trinkwasser auf dem Weg vom Wasser-Wasser-Wärmetauscher 22 zur Zapfstelle 24 für Trinkwarmwasser noch resterwärmt.

Auch hier werden die Temperaturen im Primärleitungsvorlauf 1 vor und nach dem ersten elektrischen Durchlauferhitzer 19 sowie die Temperaturen im Trinkwasser vor dem Wasser-Wasser-Wärmetauscher 22, nach dem Wasser-Wasser-Wärmetauscher 22 und nach dem zusätzlichen, ergänzenden Durchlauferhitzer 32 gemessen, also auf dem Weg direkt zur Zapfstelle 24.

Die vierte Variante der Wohnungsstation in Figur 14 bewirkt ebenfalls eine dezentrale Warmwasserbereitung im Durchfluss über eine zentrale Heizung. Eine Vorheizung der Warmwassertemperatur erfolgt über Wärmerückgewinnung aus Abwasser von einer Dusche oder beispielsweise einem Waschtisch. Außerdem erfolgt eine Vorheizung der Warmwassertemperatur über die zentrale Heizungstemperatur. Schließlich wird elektrisch über einen Durchlauferhitzer oder einen Elektrokleinspeicher die Warmwassertemperatur nachgeheizt.

Im ersten Erwärmungsschritt wird das von der Trinkwasserquelle 20 stammende kalte Trinkwasser im Wasser-Wasser-Wärmetauscher 22 teilerwärmt. Der Wasser-Wasser-Wärmetauscher 22 wird einerseits vom Primärheizungsvorlauf 1 gespeist, andererseits über eine Rückgewinnungspumpe 34 und eine Rückführleitung 35 zusätzlich von bereits gezapftem Warmabwasser 36, welches an einer Sammelstelle 37 an einer Dusche oder einem Waschtisch 38 unterhalb einer Rückgewinnungszapfstelle 39 aufgenommen wird.

Wann immer die Rückgewinnungspumpe 34 Warmabwasser 36 über die Rückgewinnungsleitung 35 am Wasser-Wasser-Wärmetauscher zur Verfügung stellen kann, lässt der Regler 11 bevorzugt das Warmabwasser 36 durch den Wasser-Wasser-Wärmetauscher 22.

In der Leitung 23 für teilerwärmtes Trinkwasser wird dieses sodann durch den elektrischen Durchlauferhitzer 19 oder eine dort vorgesehene Anlage für einen elektrischen Kleinspeicher zur Zapfstelle 24 für Trinkwarmwasser und/oder zur Rückgewinnungszapfstelle 39 geführt.

Über eine Beimischleitung 40 kann kaltes Trinkwasser kurz vor einer Rückgewinnungszapfstelle 39 beigemischt werden, wenn dies gewünscht ist. Dies wird beispielsweise bei Duschen oder Waschtischen mittels einer dortigen Armatur 41 der Fall sein.

Bei der fünften Variante einer Wohnungsstation in den Figuren 15 und 16 erfolgt eine dezentrale Warmwasserbereitung autark. Eine Vorheizung der Warmwassertemperatur erfolgt über eine Wärmerückgewinnung aus Warmabwasser von einer Dusche oder beispielsweise einem Waschtisch. Eine Nachheizung der Warmwassertemperatur erfolgt über einen elektrischen Durchlauferhitzer oder einen elektrischen Kleinspeicher.

Wenn vom elektrischen Durchlauferhitzer 19 oder dem dortigen Kleinspeicher Wasser ohne eine vorherige Armatur 41 zur Zapfstelle 24 für Trinkwarmwasser geleitet wird, sind relativ viele Temperatursensoren 13 vorhanden, insbesondere auf direktem Weg vom Durchlauferhitzer 19 zur Zapfstelle 24 für Trinkwarmwasser.

Sofern - wie in Figur 16 dargestellt - das resterwärmte Trinkwasser 42 nach dem elektrischen Durchlauferhitzer 19 noch durch eine Armatur 41 geführt wird, kann auf diese Temperaturfühler verzichtet werden.

Ein elektrisch geregelter Wärmetauscher - oder generell der Nacherhitzer - kann außerdem gleich gezielt auf die gewünschte Temperatur heizen.

Es kann sogar auf eine Regelung des Durchlauferhitzers 19 oder des dortigen Kleinspeichers durch den Regler 11 verzichtet werden.

Übergreifend über die Beispiele lässt sich mit anderen Worten Folgendes erläutern:

Das Trinkkaltwasser wird bei den Varianten 1 bis 4 vorgewärmt oder auf die entsprechende Warmwassertemperatur direkt erwärmt.

Wenn die von der Heizzentrale zur Verfügung gestellte Heiztemperatur nicht ausreicht, wird entweder das Heizungswasser in der dezentralen Wohnungsstation über einen elektrischen Durchlauferhitzer auf der Heizungsseite auf die erforderliche Temperatur erhöht, um dann die gewünschte Warmwassertemperatur zu erreichen, oder es wird nur so viel übertragen, dass der Rest an benötigter Energie von dem elektrischen Durchlauferhitzer auf der Sanitärseite nachgeheizt wird, oder es kann sein, dass - wie beispielsweise in Variante 4 - das Abwasser von Dusche, Waschtisch oder ähnlichem vorgewärmt wird, geregelt wird und nachgeheizt wird über die zentrale Heizungsanlage, und nur noch der verbleibende Rest über den sanitärseitigen elektrischen Durchlauferhitzer.

Das Abwasser sollte bei einer solchen Konstellation immer Vorrang haben, weil möglichst viel Wärme zurück gewonnen werden sollte.

Erst dann wird die Heizung zum Nachheizen verwendet.

Schließlich wird der elektrische Durchlauferhitzer eingesetzt.

Wenn gemäß Variante 5 autark gearbeitet werden soll, dann muss immer Energie über den elektrischen Durchlauferhitzer oder den elektrischen Kleinspeicher eingespeist werden, um ein ausreichend erwärmtes Abwasser zu haben. Hierbei kann die investierte Wärme zu etwa 70 % bis 80 % zurück gewonnen werden.

Alle Systeme können über einen elektronischen Regler ausgeführt werden, zum Teil aber auch mechanisch. Die Varianten 1, 2 und 3 können auf ein elektronisch gesteuertes Ventil verzichten und beispielsweise über einen mechanischen Regler betrieben werden, welcher bei Warmwasseranforderung Heißwasser durch einen Wärmetauscher passieren lässt. Ein beispielhafter Regler ist der DE 20 2008 006 054 U1 zu entnehmen.

Die Warmhaltefunktion bei mechanischen Varianten erfolgt im Sommer bevorzugt über ein zeitliches pulsierendes Bypass-Ventil, damit immer bis zur Wohnungsstation Heizungswärme vorgehalten wird und damit immer sofort Energie zur Warmwasserbereitung zur Verfügung steht.

Vorteilhafte Merkmalssammlungen, welche mit den in der vorliegenden Anmeldung zunächst beschriebenen Erfindungsaspekten kombinierbar sind:
1. Verfahren zum Erwärmen von Trinkwasser und Bereitstellen als Trinkwarmwasser mit einer Trinkwarmwassertemperatur in einer Wohnung,
   unter Nutzung eines Primärheizungsvor- und -rücklaufs,
   wobei Heizungswasser
   von einer Zentralheizung über den Primärheizungsvorlauf in einer Primärheizungsvorlauftemperatur zur Wohnung gefördert wird und
   nach Nutzung in einer kühleren Primärheizungsrücklauftemperatur über den Primärheizungsrücklauf zur Zentralheizung zurückgefördert wird,
   wobei
   die Nutzung des Heizungswassers und das Erwärmen des Trinkwassers in einer Wohnungsstation erfolgen,
   wobei in der Wohnungsstation zwei sich ergänzende Erwärmungsstufen unterschiedlichen Prinzips zum Erwärmen des Trinkwassers vorgesehen sind, nämlich eine mittels eines Wasser-Wasser-Wärmetauschers und eine mittels eines elektrischen Nachheizers.
2. Verfahren nach Merkmalssammlung 1, wobei
   als erste Erwärmungsstufe das Trinkwasser im Wasser-Wasser-Wärmetauscher teilerwärmt und
   als zweite Erwärmungsstufe sanitärseitig des Wasser-Wasser-Wärmetauschers das teilerwärmte Trinkwasser mittels des elektrischen Nachheizers aufTrinkwarmwassertemperatur resterwärmt wird;
3. Verfahren nach Merkmalssammlung 1, wobei
   als erste Erwärmungsstufe vom Primärheizungsvorlauf stammendes Heizungswasser mittels des elektrischen Nachheizers nachgeheizt und
   als zweite Erwärmungsstufe sanitärseitig des elektrischen Nachheizers das Trinkwasser im Wasser-Wasser-Wärmetauscher mittels des nachgeheizten Heizungswassers auf Trinkwarmwassertemperatur erwärmt wird;
4. Verfahren nach Merkmalssammlung 1, wobei
   als erste Erwärmungsstufe vom Primärheizungsvorlauf stammendes Heizungswasser mittels des elektrischen Nachheizers nachgeheizt wird und
   als zweite Erwärmungsstufe das Trinkwasser sanitärseitig des elektrischen Nachheizers im Wasser-Wasser-Wärmetauscher mittels des nachgeheizten Heizungswassers teilerwärmt wird und
   als dritte Erwärmungsstufe das teilerwärmte Trinkwasser sanitärseitig des Wasser-Wasser-Wärmetauschers mittels eines weiteren elektrischen Nachheizers auf Trinkwarmwassertemperatur resterwärmt wird.
5. Verfahren nach einer der vorstehenden Merkmalssammlungen, wobei Warmabwasser durch einen Rückgewinnungs-Wärmetauscher geführt wird, um Wärmeenergie aus dem Warmabwasser rückzugewinnen und mit der rückgewonnenen Wärmeenergie zum Erwärmen des Trinkwassers beizutragen, wobei das Warmabwasser insbesondere durch den genannten Wasser-Wasser-Wärmetauscher in der Wohnungsstation geführt werden kann.
6. Verfahren nach einer der vorstehenden Merkmalssammlungen, wobei eine Primärheizungsvorlauftemperatur zwischen 38 °C und maximal 60 °C gehalten wird, insbesondere gleitend.
7. Verfahren nach einer der vorstehenden Merkmalssammlungen, wobei eine Primärheizungsrücklauftemperatur zwischen 25 °C und maximal 45 °C gehalten wird, insbesondere variabel.
8. Verfahren nach einer der vorstehenden Merkmalssammlungen, wobei eine Verbrauchs- und Zustandsgrößenerfassung durchgeführt wird, wobei ermittelte Verbrauchs- und Zustandsgrößen von der Wohnungsstation an eine Steuerung für die Zentralheizung übermittelt werden.
9. Verfahren nach Merkmalssammlung 8, wobei die Zentralheizung anhand der übermittelten Verbrauchs- und Zustandsgrößen gesteuert wird.
10. Verfahren nach einer der vorstehenden Merkmalssammlungen, wobei zum elektrischen Nachheizer modular ein weiterer Nachheizer in die Wohnungsstation geschaltet wird.
11. Verfahren nach einer der vorstehenden Merkmalssammlungen, wobei ein Stellmotor vor einem Regler eingesetzt wird, um auf einen hydraulischen Abgleich Einfluss zu nehmen und nur eine maximal vorgesehene Energiemenge in die Wohnung einspeisen zu lassen.
12. Verfahren zum Erwärmen von Trinkwasser und Bereitstellen als Trinkwarmwasser mit einer Trinkwarmwassertemperatur in einer Wohnung, wobei Warmabwasser unterhalb einer Zapfstelle für Trinkwarmwasser aufgenommen und abgeführt wird,
   insbesondere nach einer der vorstehenden Merkmalssammlungen,
   wobei
   zwei sich ergänzende Erwärmungsstufen unterschiedlichen Prinzips zum Erwärmen des Trinkwassers vorgesehen sind, nämlich eine mittels eines Rückgewinn-Wärmetauschers und eine mittels eines elektrischen Nachheizers, wobei
   als erste Erwärmungsstufe das abgeführte Warmabwasser zur Nutzung durch den Rückgewinnungs-Wärmetauscher geführt wird, um Wärmeenergie aus dem Warmabwasser rückzugewinnen und mit der rückgewonnenen Wärmeenergie das Trinkwasser teilzuerwärmen, und
   als zweite Erwärmungsstufe sanitärseitig des Rückgewinnungs-Wärmetauschers das teilerwärmte Trinkwasser mittels des elektrischen Nachheizers auf Trinkwarmwassertemperatur resterwärmt wird;
   wobei beide Erwärmungsstufen in einer Wohnungsstation durchgeführt werden können, und/oder
   wobei das Warmabwasser insbesondere durch den genannten Wasser-Wasser-Wärmetauscher in der Wohnungsstation geführt werden kann, insbesondere mit Vorzug gegenüber anderweitiger Durchströmung.
13. Haustechniksystem, eingerichtet zum Durchführen eines Verfahrens nach einer oder mehreren der Merkmalssammlungen 1 bis 12, wobei die Wohnungsstation wohnungsseitig einer Übergabestelle in die Wohnung angeordnet ist.
14. Haustechniksystem, eingerichtet zum Durchführen eines Verfahrens nach einer oder mehreren der Merkmalssammlungen 1 bis 12, wobei die Wohnungsstation heizungsseitig einer Übergabestelle in die Wohnung angeordnet ist.
15. Haustechniksystem nach Merkmalssammlung 13 oder 14, wobei die Wohnungsstation von einem Gehäuse umgeben ist.
16. Haustechniksystem nach einer der Merkmalssammlungen 13 bis 15, wobei eine lernfähige Steuerung vorgesehen ist.
17. Haustechniksystem nach einer der Merkmalssammlungen 13 bis 16, wobei eine Mehrzahl dezentraler Wohnungsstationen für eine Mehrzahl Wohnungen vorgesehen ist.
18. Wohnungsstation mit einem Gehäuse, einem Wasser-Wasser-Wärmetauscher, einem elektrischen Nachheizer, einem Regler und Anschlüssen, zum Errichten eines Haustechniksystems nach einem der Merkmalssammlungen 13 bis 17.

### Bezugszeichenliste

- 1: Regelwärmetauscher
- 2: zentrale Achse
- 3: zentraler Kanal
- 4a: erste Öffnung
- 4b: zweite Öffnung
- 5: Zugriffsöffnung
- 6: Ringkanal
- 7a: obere Öffnung
- 7b: erste untere Öffnung
- 7c: zweite untere Öffnung
- 8: Rohrgewinde
- 9: Gehäusetrennung
- 10: obere Gehäusehälfte
- 11: untere Gehäusehälfte
- 12: Zylinderdurchmesser
- 13: Regelsystem
- 14: Trinkwasserzulauf
- 15: Dusche
- 16: Kessel
- 17: Heizungsvorlauf
- 18: Heizkreisvorlauf
- 19a: Wohnung
- 19b: Heizkörper
- 20: Heizungsrücklauf
- 21: Hauptwärmetauscher
- 22: Schraubkappe
- 23: Temperaturmesser
- 25: Drosselrechner
- 29: Regelsystem
- 30: Regler
- 31: Thermostateinsatz
- 32: Regelwärmetauscher
- 33: Wärmedämmung
- 34: Hauptwärmetauscher
- 35: Wärmedämmschale
- 36: Trinkwasser
- 37: Heizungsvorlauf
- 38: ZL-Anschluss
- 39: primärer Heizungsrücklauf
- 40: sekundärer Heizungsvorlauf
- 41: Weiterführung
- 42: Leitung
- 43: Stellglied
- 45: Auslass
- 50: doppelwandiger Regelwärmetauscher
- 51: dritte Einbausituation
- 52: Gehäuse
- 53: zentraler Kanal
- 54: Sicherheitsringkanal
- 55: Medienringkanal
- 56: erster Anschluss
- 57: zweiter Anschluss
- 58: Gehäusewand
- 59: Abschlussdeckel
- 60: Dichtung
- 61: Anschlussstutzen
- 62: Zuführung
- 63: T-förmiger Stutzen
- 64: gerade durchgeführtes Ende
- 65: Schraubkappe
- 66: Fixierung
- 67: Temperaturmesser
- 68: Spitze
- 69: Leckbohrung
- 70: primärer Heizungsvorlauf
- 71: T-Stück
- 72: Hauptwärmetauscher
- 73: weitere Aufteilung
- 74: aufgeteilter primärer Heizungsvorlauf
- 75: sekundärer Heizungsvorlauf
- 76: erste Kapillarrohrleitung
- 77: zweite Kapillarrohrleitung
- 78: thermostatisch geregeltes Ventil
- 79: Datenleitung
- 80: sekundärer Heizungsrücklauf
- 81: primärer Heizungsrücklauf
- 82: Abfließanschluss
- 83: Zapfstelle
- 90: vierte Einbausituation
- 91: Regelwärmetauscher
- 92: Trinkwasserzulauf
- 93: Ringkanal
- 94: Trinkwasserauslass
- 95: Hauptwärmetauscher
- 96: Zapfstelle
- 97: primärer Vorlauf
- 98: zentraler Kanal
- 99: Termperaturmessspitze
- 100: thermostatisch geregeltes Ventil
- 110: Fünfte Einbausituation
- 111: Hauptwärmetauscher
- 112: primärer Heizungsvorlauf
- 113: erster Schmutzfänger
- 114: Vorlaufverzweigung
- 115: Erste Entlüftung
- 116: Sekundärer Heizkreislauf
- 117: Regel- und Heizschaltung
- 118: Sekundärer Heizungsvorlauf
- 119: Sekundärer Heizungsrücklauf
- 120: Zweiter Schmutzfänger
- 121: Zonenverntil
- 122: Zweite Entlüftung
- 123: Passstück
- 124: Primärer Heizungsrücklauf
- 125: Kugelhahn
- 126: Eckventil
- 127: Erste Verbindungsleitung
- 128: Heizungswassereinführstutzen
- 129: Zentraler Kanal
- 130: Temperaturmessfühler
- 131: Messspitze
- 132: Erste Kapillarrohrleitung
- 133: Thermosiphon
- 134: Trinkwasser
- 135: Zweites Passstück
- 136: Trinkwasserverzweigung
- 137: Zu erwärmender Strang
- 138: Erster Anschluss
- 139: Ende des Regelwärmetauschers
- 140: Erster Auslass
- 141: Kaltwasserspeisung
- 142: Zweiter Auslass
- 143: Zweite Verbindungsleitung
- 144: Warmwasserleitung
- 145: Temperaturmischmittel
- 146: Trinkwarmwasserleitung
- 147: Differenzdruckregler
- 148: Zweite Kapillarrohrleitung
- 150: Sechste Einbausituation
- 151: Elektrische Nachheizstation

## Patentansprüche

1. Regelsystem zum Bereitstellen eines mittels eines Primärmediums erwärmten Sekundärmediums an einer Zapfstelle in einem Gebäude, mit einem Hauptwärmetauscher und einer Drossel,
***dadurch gekennzeichnet, dass***
zusätzlich zum Hauptwärmetauscher ein Regelwärmetauscher vorgesehen ist, welcher mit dem Hauptwärmetauscher in Reihe angeordnet ist, und dass die Drossel dazu eingerichtet ist, in Abhängigkeit eines Temperaturmessers am Sekundärmedium und/oder eines Temperaturmessers in einem Rücklauf des Primärmediums auf ein Stellglied für das Primärmedium einzuwirken.

2. Regelsystem nach Anspruch 1, ***dadurch gekennzeichnet, dass*** der Regelwärmetauscher für das Primärmedium stromauf des Hauptwärmetauschers angeordnet ist, bevorzugt an einem Heizungsvorlauf.

3. Regelsystem nach Anspruch 1 oder 2, ***dadurch gekennzeichnet, dass*** der Hauptwärmetauscher für das Sekundärmedium stromauf des Regelwärmetauschers angeordnet ist, und zwar an einem Trinkwasserzulauf.

4. Regelsystem nach einem der vorstehenden Ansprüche, ***dadurch gekennzeichnet, dass*** ein Hauptwärmetauschvolumen für das Sekundärmedium im Hauptwärmetauscher größer ist als ein Reglerwärmetauschvolumen für das Sekundärmedium im Regelwärmetauscher, bevorzugt mehr als 5, 10, 50, 100 oder 500 Mal so groß.

5. Regelsystem nach einem der vorstehenden Ansprüche, ***dadurch gekennzeichnet, dass*** der Regelwärmetauscher zum Bereitstellen des Primärmediums an einen Heizungsvorlauf angeschlossen ist.

6. Regelsystem nach einem der vorstehenden Ansprüche, ***dadurch gekennzeichnet, dass*** der Regelwärmetauscher einen Heizkreisvorlauf speist.

7. Regelsystem nach einem der vorstehenden Ansprüche, ***dadurch gekennzeichnet, dass*** ein Bypass für das Primärmedium vorgesehen ist, sodass auch bei geschlossenem Stellglied ein Leckstrom an Primärmedium zum und/oder durch den Regelwärmetauscher strömen kann.

8. Regelsystem nach einem der vorstehenden Ansprüche, ***dadurch gekennzeichnet, dass*** das Primärmedium und das Sekundärmedium sowohl im Haupt- als auch im Regelwärmetauscher in Gegenstrom zueinander angeschlossen sind.

9. Regelsystem nach einem der vorstehenden Ansprüche,
***dadurch gekennzeichnet, dass***
der Regelwärmetauscher koaxial ausgeführt ist
und/oder
ein Primärmedium- und/oder ein Sekundärmediumanschluss in ihrer Orientierung am Regelwärmetauscher verstellbar gestaltet sind, bevorzugt drehbar
und/oder
der Temperaturmesser in einer Sekundärmediumführung angeordnet ist, bevorzugt im Regelwärmetauscher, und die Drossel dazu eingerichtet ist, das Stellglied zu öffnen, wenn eine untere Hysteresetemperatur erreicht ist, und das Stellglied zu schließen, wenn eine obere Hysteresetemperatur erreicht ist
und/oder
der Regelwärmetauscher eine einstellbare Thermostateinrichtung aufweist und/oder
der Regelwärmetauscher isolierverkleidet ist, während der Hauptwärmetauscher bevorzugt nicht isolierverkleidet ist.

10. Regelsystem nach einem der vorstehenden Ansprüche, ***dadurch gekennzeichnet, dass*** die Drossel in Mussverbindung mit zwei Temperaturmessern steht, insbesondere mit einem ersten Temperaturmesser im Sekundärmedium und mit einem zweiten Temperaturmesser in einem Rücklauf des Primärmediums.

11. Regelsystem nach einem der vorstehenden Ansprüche, ***dadurch gekennzeichnet, dass*** das Primärmedium und/oder das Sekundärmedium in einem Bypass zu einer Hauptleitung durch den Regelwärmetauscher geführt werden.

12. Regelsystem nach einem der vorstehenden Ansprüche, ***dadurch gekennzeichnet, dass*** der Temperaturmesser an einem Bypass für das Sekundärmedium und/oder an einem Bypass des Primärmediums an dessen Rücklauf angeordnet ist.

13. Verfahren zum Nachrüsten eines Gebäudes und/oder eines Gebäudeteils mit einem Regelwärmetauscher, wobei ein Regelwärmetauscher für ein Regelsystem nach einem der vorstehenden Ansprüche zusätzlich zu einem Hauptwärmetauscher angeschlossen wird, und zwar stromauf hinsichtlich eines Primärmediums an Heizungsvorlauf; sowie stromab hinsichtlich eines zu erwärmenden Sekundärmediums stromauf einer Zapfstelle.

14. Verfahren zum Bereitstellen eines mittels eines Primärmediums erwärmten Sekundärmediums an einer Zapfstelle in einem Gebäude, mit einem Hauptwärmetauscher, einem Regelwärmetauscher sowie mit einer Drossel mit einem Temperaturmesser und einem Stellglied, wobei
a. vor einem Zapfvorgang, also bei stehendem Sekundärmedium,
i. im Regelwärmetauscher ein Regelwärmetauschervolumen des Sekundärmediums mittels des Primärmediums zwischen einer unteren und einer oberen Hysteresetemperatur gehalten wird,
ii. während bevorzugt keine Strömung durch den Hauptwärmetauscher zugelassen wird,
b. und/oder zu Beginn und während des Zapfvorgangs, also bei einem von einer Zapfstelle vorgegebenen Volumenstroms an Sekundärmedium,
i. zunächst das Regelwärmetauschervolumen des Sekundärmediums zur Zapfstelle geführt wird, gefolgt von einem Sekundärmediumstrom zunächst durch den Hauptwärmetauscher und anschließend durch den Regelwärmetauscher,
ii. am Regelwärmetauscher durch den Temperaturmesser bei in der Regel kühlerem nächströmendem Sekundärmedium die untere Hysteresetemperatur detektiert wird,
iii. daraufhin die Drossel das Stellglied öffnet, bis die obere Hysteresetemperatur gemessen wird,
iv. daraufhin das Stellglied das Stellglied schließt, bis die untere Hysteresetemperatur gemessen wird,
v. wobei zum Regeln die Schritte iii und iv permanent durchlaufen werden,
c. und/oder bei Abschluss des Zapfvorgangs, also bei angehaltenem Sekundärmedium,
i. das Reglerwärmetauschvolumen an Sekundärmedium bei strömendem Primärmedium binnen weniger Sekunden bis zur oberen Hysteresetemperatur erwärmt wird,
ii. woraufhin die Drossel den Primärvolumenstrom durch den Hauptwärmetauscher über das Stellglied unterbindet.
